# EUROPÄISCHE PATENTSCHRIFT

(11) **EP 3 010 620 B1**
(45) Veröffentlichungstag und Bekanntmachung des Hinweises auf die Patenterteilung: **29.04.2020**
(21) Anmeldenummer: 14741209.2
(22) Anmeldetag: 18.06.2014
(51) Int. Cl.: B29C 48/69, B01D 29/94

(54) **FILTEREINRICHTUNG UND AUSTRAGVERFAHREN**
FILTER DEVICE AND DISCHARGE METHOD
DISPOSITIF FILTRANT ET PROCÉDÉ D'ÉVACUATION

(30) Priorität: 18.06.2013 DE 202013102619 U; 25.07.2013 DE 202013103371 U
(43) Veröffentlichungstag der Anmeldung: 27.04.2016
(73) Patentinhaber: Ettlinger Kunststoffmaschinen GmbH, 86343 Königsbrunn (DE)
(72) Erfinder: ETTLINGER, Roderich, 86179 Augsburg (DE); ETTLINGER, Thorsten, 86830 Schwabmünchen (DE)
(74) Vertreter: Ernicke, Klaus Stefan
(86) Internationale Anmeldenummer: PCT/EP2014/062877
(87) Internationale Veröffentlichungsnummer: WO 2014/202690

(56) Entgegenhaltungen:
- EP-A1- 0 168 590
- EP-A2- 0 073 076
- WO-A2-2012/079993
- DE-A1-102007 063 240
- DE-A1-102009 049 355

## Beschreibung

Die Erfindung betrifft eine Filtereinrichtung für Kunststoffschmelzen und ein Austragverfahren von Filterrückständen an einer solchen Filtereinrichtung mit den Merkmalen im Oberbegriff des Verfahrens- und Vorrichtungshauptanspruchs.

Die DE 10 2009 049 355 A1 zeigt einen Rückspülfilter für Kunststoffschmelzen mit einem rotierenden und axial oszillierenden Abstreifer an der Außenseite des Filters. Der Abstreifer streift Kunststoffmaterial an der Oberfläche des Filters ab und ist als Schraubenelement mit einem axialen Ende ausgebildet, welches ein Steuerventil zum Verschließen eines Reinigungsports bildet.

Die WO 2012/079993 A2 betrifft die Filterung von Kunststoffschmelzen, wobei die Filterrückstände durch einen Schaber und nicht durch Rückspülen gelöst werden.

Aus der Praxis sind Filtereinrichtungen mit einer Reinigungsvorrichtung und einer Austragvorrichtung bekannt, bei denen die Reinigungsvorrichtung eine Rückspüleinrichtung zum Ablösen der Filterrückstände aufweist. Die Austragvorrichtung ist dabei mittels einer Zuführleitung an einem Sammelbereich für die abgelösten Filterrückstände an der Reinigungsvorrichtung angeschlossen. Der Austrag erfolgt unter dem aus dem Filterraum einwirkenden Fluiddruck. Zur Steuerung des Austrags sind Klappen, Nadeln oder andere gesteuert verschiebliche Sperrelemente vorgesehen.

Es ist Aufgabe der vorliegenden Erfindung, eine verbesserte Filtereinrichtung und Austragtechnik aufzuzeigen.

Die Erfindung löst diese Aufgabe mit den Merkmale in den selbstständigen Ansprüchen 1 und 15. Die beanspruchte Austragtechnik, d.h. die Filtereinrichtung für Kunstsoffschmelzen mit der Austragvorrichtung und das Austragverfahren, haben den Vorteil, dass die ausgetragene Materialmenge besser und genauer gesteuert und dosiert werden kann. Insbesondere können Leckageverluste und ein übermäßiger Austrag von bereits gefiltertem Material vermieden werden.

Die beanspruchte Austragtechnik lässt sich mit Filtereinrichtungen kombinieren. Dies kann im Wege der Erstausrüstung, aber auch mittels einer Nachrüstung, erfolgen. Insbesondere könne bei bestehenden Filtereinrichtungen vorhandene Austragvorrichtungen oder ggf. auch Reinigungsvorrichtungen nebst Austragvorrichtungen, erneuert bzw. ausgetauscht werden.

Die beanspruchte Austragtechnik hat wesentliche Vorteile hinsichtlich der Betriebssicherheit, Verfügbarkeit, des geringen Bauaufwands und der hohen Wirtschaftlichkeit. Die Reinigung bzw. der Austrag der abgelösten Filterrückstände können im Prozess während eines kontinuierlichen oder diskontinuierlichen Filterns erfolgen. Sie können alternativ auch außerhalb des eigentlichen Filterprozesses in einem Wartungsbereich erfolgen, wobei ggf. der oder die Filter zur Vermeidung von Betriebsunterbrechungen gewechselt, insbesondere verschoben werden.

Ein besonderer Vorteil der beanspruchten Austragtechnik ist die Möglichkeit einer Abschottung gegenüber der äußeren Umgebung. Die Dosiereinrichtung kann als Sperr- und Dichtelement wirken. Hierbei kann der Zugang von außen her zum Filter- oder Prozessraum abgedichtet und verschlossen sein. Die Dosiereinrichtung bzw. das Sperr- und Dichtelement kann eine beschränkte Aufnahmekapazität aufweisen. Es kann dabei nur die aufgenommenen Materialportionen an einer Stelle aufnehmen und an einer anderen Stelle wieder abgeben. Im Bereich dazwischen kann es der Zugang von außen her zum Filter- oder Prozessraum abgedichten und verschließen. Dies hat insbesondere Vorteile hinsichtlich der Vermeidung einer Kontaminierung oder Oxidation des zu filternden Fluids in der Filtereinrichtung.

Der Materialaustrag kann wahlweise im Strom oder portionsweise erfolgen. Insbesondere können Materialportionen an einer Stelle aufgenommenen und an einer anderen Stelle wieder abgegeben werden.

Die beanspruchte Austrag- und Dosiertechnik ist in der Anwendung flexibel und kann mit unterschiedlichen Filtern, insbesondere Rohr- und Scheibenfiltern, zusammenwirken. Die Dosiereinrichtung und die Ablöseeinrichtung können außerdem zu einer Bau- und Funktionseinheit kombiniert werden.

Die beanspruchte Austragtechnik betrifft Kunststoffschmelzen, die mit Verunreinigungen, z.B. Fremdkörpern, Verklumpungen oder dergleichen versetzt sein können. Dies kann insbesondere bei Kunststoffschmelzen aus Abfallmaterialien der Fall sein.

Die Austragtechnik kann kontinuierlich oder intermittierend eingesetzt werden. Dies kann über die Dosiereinrichtung gesteuert werden. Eine Reinigung des Filters und ein Austrag der Filterrückstände kann dadurch bedarfsweise und je nach Art des Fluids erfolgen.

Die Dosiereinrichtung kann vorteilhafterweise steuerbar und an unterschiedliche Fluide bzw. Betriebserfordernisse anpassbar sein. Eine Steuerung ist einerseits hinsichtlich der Rotation des Drehkörpers und dessen Geschwindigkeit mittels eines geeigneten steuerbaren Drehantriebs möglich. Dieser kann separat vorgesehen und separat gesteuert oder geregelt sein. Er kann alternativ auch von vorhandenen anderen Antrieben, z.B. von der Reinigungsvorrichtung und/oder der Filtereinrichtung abgeleitet sein. Der Drehantrieb kann außerdem mit einem Drehantrieb für den Filter abgestimmt werden.

Ferner kann das Austragsvolumen über die Größe der ausgetragenen Materialportionen und der hierfür vorgesehenen Aufnahmetaschen am Drehkörper gesteuert und ggf. über eine entsprechende Sensorik am Ausgang der Austragseinrichtung geregelt werden.

Für den Austrag der Materialportionen kann ein Aktor am Drehkörper vorhanden sein, der unterschiedlich ausgebildet und gesteuert sein kann. Das Befüllen der Aufnahmetaschen kann in allen Varianten durch den Materialdruck aus dem Prozessraum oder Filterraum erfolgen. Das Ausstoßen und Entleeren der Aufnahmetasche kann durch einen beweglichen Stößel in der Art eines Kolbens erfolgen. Dieser kann einerseits bei entsprechender Ausbildung durch den Materialdruck aus dem Prozess- oder Filterraum angetrieben werden, sodass beim Befüllen einer Aufnahmetasche eine gegenüberliegende Aufnahmetasche gleichzeitig geleert wird.

In einer anderen Variante kann ein Stößel von einem Antriebselement gesteuert betätigt, insbesondere ausgeschoben werden. Ferner ist es möglich, die Volumenänderung der Aufnahmetasche auf beliebige andere Weise mit einem entsprechenden Aktor zu erzeugen, der z.B. flexible Taschenwände kontraktiert und dadurch die enthaltene Materialportion austreibt. Dies kann eine ähnliche Technik wie bei Tintenstrahldruckern oder dgl. sein. Die Hubsteuerung des Antriebselements kann mit dem steuerbaren Drehantrieb der Dosiereinrichtung und ggf. auch des Filters abgestimmt werden.

Die Dosiereinrichtung kann eine Mehrfachanordnung von Aufnahmetaschen und Aktoren aufweisen, die ggf. in Drehrichtung zueinander versetzt sind. Dies kann den Materialaustrag vergleichmäßigen und evtl. unerwünschte Schwingungen im System mindern oder eliminieren.

Der Transport und Austrag der abgelösten Filterrückstände kann über den in der Filtervorrichtung bzw. der Reinigungsvorrichtung bestehenden fluidischen Materialdruck getrieben werden. Dies kann z.B. der Fluiddruck (P) im Prozessraum sein. Ein zusätzliches Fördermittel, z.B. ein Schieber für den Transport bis zur Dosiereinrichtung kann entbehrlich sein.

In den weiterem Ansprüchen sind vorteilhafte Ausgestaltungen der Erfindung angegeben.

Die Erfindung ist in den Zeichnungen beispielhaft und schematisch dargestellt. Im einzelnen zeigen:
- Figur 1:: einen Längsschnitt durch eine erste Variante einer Filtereinrichtung mit einer Reinigungsvorrichtung und einer Austragvorrichtung,
- Figur 2:: eine Frontansicht der Anordnung gemäß Pfeil II von Figur 1,
- Figur 3:: ein Längsschnitt durch eine andere Variante einer Filtereinrichtung, Reinigungsvorrichtung und Austragvorrichtung,
- Figur 4:: ein Längsschnitt durch eine dritte Variante einer Filtereinrichtung mit Reinigungsvorrichtung und Austragvorrichtung.
- Figur 5:: eine Stirnansicht der Anordnung gemäß Pfeil V von Figur 4,
- Figur 6: bis 8: eine Ausführungsform der Dosiereinrichtung in verschiedenen Betriebsstellungen,
- Figur 9:: eine Dosiereinrichtung mit einer Stelleinrichtung im Längsschnitt,
- Figur 10:: eine abgebrochene und vergrößerte Darstellung eines Details X von Figur 9,
- Figur 11 und 12:: eine weitere Variante einer Filtereinrichtung mit einer Reinigungsvorrichtung, einer Austragvorrichtung und einer Dosiereinrichtung im Längs- und Querschnitt,
- Figur 13a-d:: die Anordnung von Figur 11 und 12 mit unterschiedlichen Betriebsstellungen der Dosiereinrichtung,
- Figur 14 und 15:: eine erste Abwandlung der Anordnung von Figur 11 im Längs- und Querschnitt,
- Figur 16 und 17:: eine zweite Abwandlung der Anordnung von Figur 11 im Querschnitt und in einer abgebrochenen Detaildarstellung der Dosiereinrichtung in einer anderen Betriebsstellung,
- Figur 18 bis 20:: Details der Dosiereinrichtung von Figur 16 mit einem Schaber in verschiedenen Betriebsstellungen,
- Figur 21 und 22:: eine dritte Abwandlung der Anordnung von Figur 11 im Querschnitt und mit einem im Detail dargestellten Dosierelement,
- Figur 23 und 24:: eine vierte Abwandlung der Anordnung von Figur 11 im Querschnitt und mit anderen, im Detail dargestellten Dosierelement,
- Figur 25 bis 26c:: eine weitere Abwandlung einer Dosiereinrichtung mit einem Schaber und einem verschiebbaren Dosierelement,
- Figur 27 und 28:: eine mechanische Trenneinrichtung zum Ablösen von Filterrückständen mit einem Schneckenförderer in geschnittenen und geklappten Detailansichten,
- Figur 29 und 30:: eine weitere Abwandlung einer Dosiereinrichtung mit einem Räumelement in verschiedenen Betriebsstellungen,
- Figur 31 bis 33:: eine Abwandlung der Dosiereinrichtung in verschiedenen Betriebsstellungen,
- Figur 34 und 35:: eine Abwandlung der Reinigungsvorrichtung von Figur 11 mit einer anderen Ablöseeinrichtung für Filterrückstände in verschiedenen Betriebsstellungen,
- Figur 36 und 37:: eine weitere Abwandlung der Dosiereinrichtung in verschiedenen Betriebsstellungen und
- Figur 38:: eine weitere Abwandlung der Austragvorrichtung und der Dosiereinrichtung.

Die Erfindung betrifft eine Austragvorrichtung (3) und ein Austragverfahren für Filterrückstände (9). Die Erfindung betrifft ferner eine damit ausgerüstete Reinigungsvorrichtung (2) nebst Reinigungsverfahren und eine damit ausgerüstete Filtereinrichtung (1) bzw. ein Filterverfahren. Ferner betrifft die Erfindung eine besondere Ausführungsform einer Dosiereinrichtung (4) und eines Dosierverfahrens.

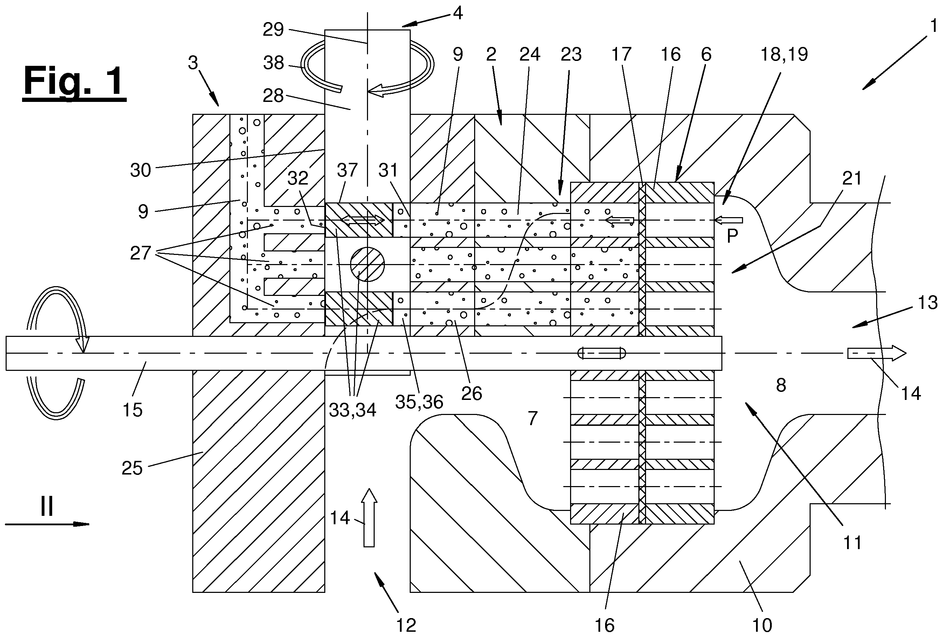

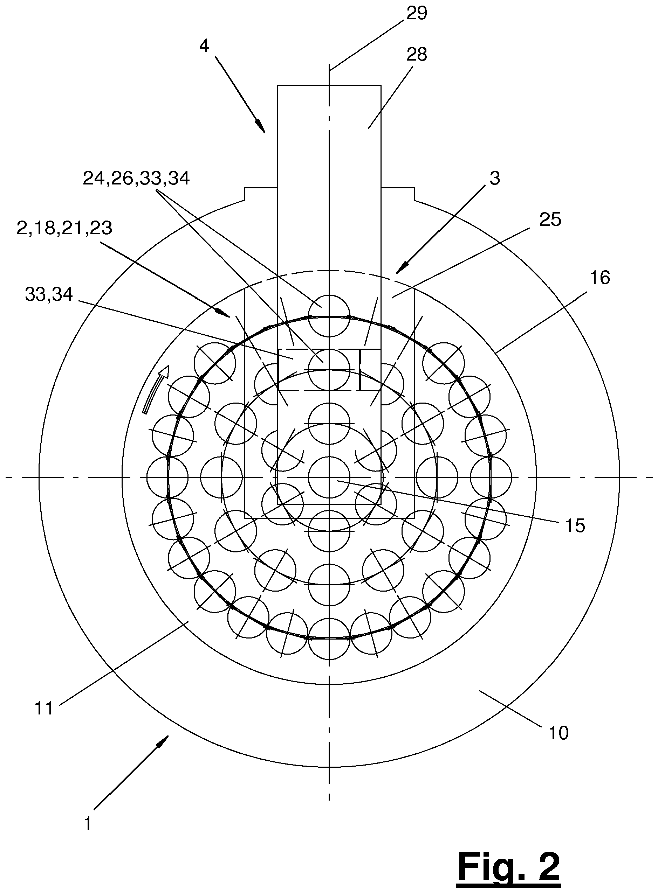

Figur 1 zeigt in einem Längsschnitt eine erste Variante einer Filtereinrichtung (1) mit einer Reinigungsvorrichtung (2) und einer Austragvorrichtung (3) mit einer Dosiereinrichtung (4). In Figur 2 ist die zugehörige Stirnansicht gemäß Pfeil II von Figur 1 dargestellt. Die Reinigungsvorrichtung (2) und die Austragvorrichtung (3) mit der Dosiereinrichtung (4) können integraler Bestandteil der Filtereinrichtung (1) sein. Sie können alternativ eigenständige und anbaubare Vorrichtungen sein, die ggf. auch nachgerüstet werden können. Die Ausgestaltung gilt auch für die anderen nachfolgend beschriebenen Varianten.

Die Filtereinrichtung (1) dient zum Filtern von Fluiden (7), die bevorzugt als fließfähige, z.B. flüssige oder plastische Massen ausgebildet sind. Das ungefilterte Fluid (7) kann mit Feststoffen versetzt sein, bei denen es sich um Fremdstoffe, z.B. Metallpartikel, oder um Verklumpungen oder dergleichen handeln kann. Das ungefilterte Fluid (7) ist ein geschmolzenes Kunststoffmaterial, das z.B. von einem Extruder (nicht dargestellt) zugeführt wird. Die Filtereinrichtung (1) kann eine Heizeinrichtung (nicht dargestellt) zur Fluidbeheizung aufweisen.

Das ungefilterte Fluid (7) wird über eine Zuführung (12) mit Druck in eine Filterkammer (11) zugeführt, in der sich ein Filter (5,6) befindet. Das nach Durchlaufen des Filters (5,6) gefilterte Fluid (8) wird dann über eine ggf. verengte Abführung (13) in der Filtereinrichtung (1) weitergeführt, bzw. aus dieser abgeführt. Pfeile (14) bezeichnen die Fließrichtung. In der Filterkammer (11) herrscht in den Fluiden (7,8) ein Fluiddruck (P). Die vorgenannten Ausgestaltungen der Filtereinrichtung (1) können in den anderen Ausführungsbeispielen die gleichen sein.

Der Filter (6) kann unterschiedlich, z.B. als Scheibenfilter oder als Rohrfilter ausgebildet sein. Die nachfolgend beschriebenen Ausführungsbeispiele geben hierfür verschiedene Varianten an.

Der Filter (6) ist im Ausführungsbeispiel von Figur 1 und 2 als Scheibenfilter ausgebildet. Er kann um eine Achse (15) drehbar gelagert sein und kann während des Filterprozesses und des Fluiddurchtritts um diese Achse (15) rotieren. Die Achse (15) kann einen steuerbaren Drehantrieb (nicht dargestellt) aufweisen. Die Drehung und die Filterung können kontinuierlich erfolgen. Die Drehgeschwindigkeit kann an unterschiedliche Fluide (7,8) und an unterschiedliche Betriebserfordernisse, z.B. variierende Fluidmengen, Drücke, Temperaturen, Feststoffbelastungen etc. angepasst werden.

Der Scheibenfilter (6) besteht aus einem Filterträger (16), der in Figur 1 von zwei gelochten Stützscheiben gebildet wird. Die Stützscheiben spannen zwischen sich ein Filterelement (17) ein, welches in den Lochbereichen von dem Fluid (7) durchströmt wird. Das Filterelement (17) kann z.B. als gelochte Siebscheibe, als textile Filterscheibe oder dergleichen ausgebildet sein. Der Filterträger (16) und das Filterelement (17) sind auf der Achse bzw. Welle (15) aufgezogen und endseitig gehalten. Sie werden im Gehäuse (10) in geeigneten umfangseitigen Ausnehmungen oder anderen Führungselementen geführt.

Die Reinigungsvorrichtung (2) dient zum Ablösen von Filterrückständen (9), die sich im Verlauf des Filterprozesses auf der Schmutzseite des Filterelements (17) bzw. der Filteroberfläche (52) absetzen. Dies können die vorgenannten Verunreinigungen oder dgl. sein. Die Reinigungsvorrichtung (2) weist eine Ablöseeinrichtung (18) für die Filterrückstände (9) auf, die unterschiedlich ausgebildet sein kann. Sie ist im Ausführungsbeispiel von Figur 1 als Rückspüleinrichtung (19) ausgebildet. Die Filterrückstände (9) werden dabei mit dem auf der Reinseite des Filters (5,6) wirkenden Fluiddruck (P) abgelöst.

Bei der gezeigten Ausführungsform von Figur 1 kann die Reinigungsvorrichtung (2) während des Filterprozesses bevorzugt kontinuierlich, alternativ diskontinuierlich, wirken. Sie ist dabei der Filterkammer (11) bzw. dem Prozessraum zugeordnet und weist dort einen Reinigungsbereich (21) auf, durch den der drehende Filter (5,6) z.B. permanent hindurchbewegt wird.

Auf der Reinigungsseite des Filters (5,6), insbesondere des Filterelements (17), befindet sich ein Sammelbereich (23) für die abgelösten Filterrückstände (9). Dieser Sammelbereich (23) kann sich innerhalb der Filterkammer (11) befinden und gegen diese in geeigneter Weise abgedichtet sein. Die Dichtung verhindert ein Austreten der abgelösten Filterrückstände (9) in den Bereich des zu filternden Fluids (7).

Der Sammelbereich (23) schließt auf der einen Seite an den Filter (5,6), insbesondere die zugewandte gelochte Stützscheibe des Filterträgers (16) dicht an. Auf der anderen Abströmseite schließt der Sammelraum (23) an die Austragvorrichtung (3) an. Der Sammelbereich (23) kann ein einteiliger und von der Dichtung umgebener Raum sein. Im gezeigten Ausführungsbeispiel ist der Sammelbereich (23) in mehrere parallele Sammelkanäle (24) unterteilt. Deren Verteilung kann mit der Lochverteilung der Stützscheiben bzw. des Filterträgers (16) übereinstimmen. Die Reinigungsvorrichtung (2) und der Sammelbereich (23) sind im gezeigten Ausführungsbeispiel stationär angeordnet. Während der Filterdrehung kommen dadurch die Stützscheibenlöcher und die Sammelkanäle (24) immer wieder zur Deckung, sodass ein Durchströmen der abgelösten Filterrückstände (9) möglich ist.

Die Austragvorrichtung (3) ist im unmittelbaren Anschluss an die Reinigungsvorrichtung (2) angeordnet und weist eine oder mehrere Zuführleitungen (26) auf, die entsprechend des Sammelbereichs (23) bzw. der Sammelkanäle (24) angeordnet und ausgerichtet sind und an diese für eine Strömungsverbindung fluchtend anschließen.

Im gezeigten Ausführungsbeispiel von Figur 1 ist ein direkter Anschluss vorhanden. In einer anderen Ausführungsform kann die Austragvorrichtung (3) örtlich getrennt und distanziert von der Reinigungsvorrichtung (2) sowie der Filtereinrichtung (1) angeordnet sein, wobei eine Überbrückungs- oder Verlängerungsleitung zur Verbindung mit dem Sammelbereich (23) bzw. den Sammelkanälen (24) vorhanden ist. Die Austragvorrichtung (3) ist in der gezeigten Ausführungsform von Figur 1 und 2 und in der vorgenannten Variante stationär angeordnet und z.B. am Filtergehäuse (1) montiert.

Die Austragvorrichtung (3) weist im Anschluss an die einen oder mehreren Zuführleitungen (26) eine steuerbare Dosiereinrichtung (4) auf. Die Dosiereinrichtung (4) sperrt die Zuführleitung(en) (26) in Ausströmrichtung ab und verhindert einen unerwünschten Austritt von Filterrückständen (9). Andererseits ist die Dosiereinrichtung (4) derart ausgestaltet, dass sie die abgelösten Filterrückstände (9) portionsweise (35) aus der oder den Zuführleitungen (26) aufnimmt und an einer anderen, örtlich getrennten Stelle wieder abgibt. Hierfür sind eine oder mehrere Abführleitungen (27) im Gehäuse (25) der Austragvorrichtung (3) angeordnet, welche die Materialportionen (35) der Filterrückstände (9) aufnehmen, ggf. in einem Sammelkanal zusammenführen und dann aus der Austragvorrichtung (3) ausleiten. Die einfach oder mehrfach vorhandenen Zuführ- und Abführleitungen (26,27) können in einer entsprechenden Zahl und Anordnung vorhanden sein.

Die Dosiereinrichtung (4) ist zwischen der oder den Zuführleitungen (26) und der oder den Abführleitungen (27) im Gehäuse (25) angeordnet.

Die Dosiereinrichtung (4) weist ein bewegliches Dosierelement (28) auf. Das Dosierelement (28) kann z.B. drehbar und/oder verschieblich angeordnet sein und bewirkt die portionsweise Dosierung (35). In anderen, nachfolgend erläuterten Ausführungsbeispielen kann die Dosiereinrichtung (4) die abgelösten Filterrückstände wahlweise im Strom aus der oder den Zuführleitungen (26) aufnehmen und an einer anderen, örtlich getrennten Stelle wieder abgeben.

Im Ausführungsbeispiel von Figur 1 weist die Dosiereinrichtung (4) ein Dosierelement (28) in Form eines um eine Achse (29) rotierenden Drehkörpers (28) auf, der z.B. als zylindrische Welle oder Walze ausgebildet ist. Der Drehkörper (28) kann einen steuerbaren Drehantrieb (38) aufweisen, der durch einen Pfeil symbolisiert ist. Der Drehantrieb (38) kann auf den Drehantrieb bzw. die ggf. veränderliche Drehgeschwindigkeit des Filters (5,6) abgestimmt sein.

Der Drehkörper (28) weist an seiner Außenseite eine oder mehrere Aufnahmetaschen (36) auf, die in ihrem Volumen veränderbar sind und die zur Aufnahme und Abgabe einer besagten Materialportion (35) dienen. Die Zahl und Anordnung der Aufnahmetaschen (36) kann sich nach der Zahl und Anordnung der Zuleitungen (26) richten.

Der Drehkörper (28) ist ansonsten von der Wandung (30) des Gehäuses (25) mit Ausnahme der Anschlussstellen von Zuführleitung(en) (26) und Abführleitung(en) (27) dicht umgeben. Er sperrt dadurch den direkten Durchfluss zwischen der oder den Zuführ- und Abführleitung(en) (26,27). Er verhindert dadurch auch einen Durchtritt von äußeren Umgebungseinflüssen aus der oder den Abführleitung(en) (27) in den Sammelbereich (23) und weiter in den Filterraum (11).

Der Drehkörper (28) weist einen Aktor (33) auf, der das Taschenvolumen der Aufnahmetasche(n) (36) bedarfsweise und vorzugsweise gesteuert verkleinert und vergrößert. Bei einer Vergrößerung wird eine Materialportion (35) aufgenommen und bei einer Verkleinerung wieder abgegeben. Die Zufuhr einer Materialportion aus einer Zuführleitung (26) kann durch den Fluiddruck (P) erfolgen, wenn gemäß Figur 1 die Aufnahmetasche (36) mit der Zuführleitung (26), dem Sammelkanal (24) und der Lochung an der Stützscheibe des Filterträgers (16) unter Bildung eines Durchflusskanals fluchtet. Die Zu- und Abführleitungen (26, 27) sind z.B. radial zur Drehachse (29) ausgerichtet und diametral gegenüberliegend angeordnet.

In der Variante von Figur 1 weist der Aktor (33) einen beweglichen Stößel (34) auf, der den Taschenboden der Aufnahmetasche (36) bildet. Der Aktor (33) weist dabei einen quer zur Drehachse (29) ausgerichteten Aufnahmekanal (37) im Drehkörper (28) auf, in dem der Stößel (34) längsverschieblich angeordnet ist. Die Stößellänge ist dabei kürzer als die Kanallänge. Der Aufnahmekanal (37) ist in der gezeigten Ausführungsform radial am Drehkörper (28) ausgerichtet und schneidet die zentrale Drehachse (29) .

Alternativ kann der Aufnahmekanal (37) gegenüber der Achse (29) versetzt in der Art einer Sekante angeordnet sein. Es können auch mehrere solcher versetzter Aufnahmekanäle in paralleler Anordnung vorhanden sein, wobei die Zu- und Abführleitungen (26,27) entsprechend mehrfach angeordnet sind. Der Aufnahmekanal (37) kann ferner statt der gezeigten geraden Ausrichtung eine abgebogene bzw. abgewinkelte Form aufweisen, wobei ein Kanalabschnitt auch längs oder schräg zur Drehachse (29) verlaufen kann.

In der gezeigten Ausführungsform ist der Aufnahmekanal (37) als Durchgangskanal ausgebildet, der den Drehkörper (28) quer zur Achse (29) durchsetzt und an beiden Enden am Drehkörpermantel Mündungsöffnungen (31,32) aufweist. Die Zuführ- und Abführleitung(en) (26,27) sind derart in Relation zueinander und zum Aufnahme- bzw. Durchgangskanal (37) angeordnet, dass sie zumindest in einer Drehstellung des Drehkörpers (28) mit beiden Mündungsöffnungen (31,32) gleichzeitig in Deckung stehen. Figur 1 zeigt dies mit den längsgeschnittenen Stößeln (34).

Der Drehkörper (28), insbesondere eine Welle, kann mehrere Aktoren (33) und mehrere Aufnahmetaschen (36) aufweisen. Gemäß Figur 1 sind dabei mehrere Aktoren (33) und mehrere Aufnahmetaschen (36) längs der Drehachse (29) hintereinander angeordnet. Es können dabei bzgl. der Drehachse (29) eine gleiche oder gegenseitig unterschiedliche Winkelausrichtung aufweisen. In Figur 1 und 2 sind gekreuzte Ausrichtungen gezeigt.

Die Stößel (34) und die linearen Aufnahmekanäle (37) haben eine gegenseitig angepasste Querschnittsform, die z.B. kreisrund ausgebildet ist. Der Stößel (34) sperrt im Aufnahme- oder Durchflusskanal (37) den direkten Durchfluss der Materialportion (35) zwischen den Mündungsöffnungen (31,32).

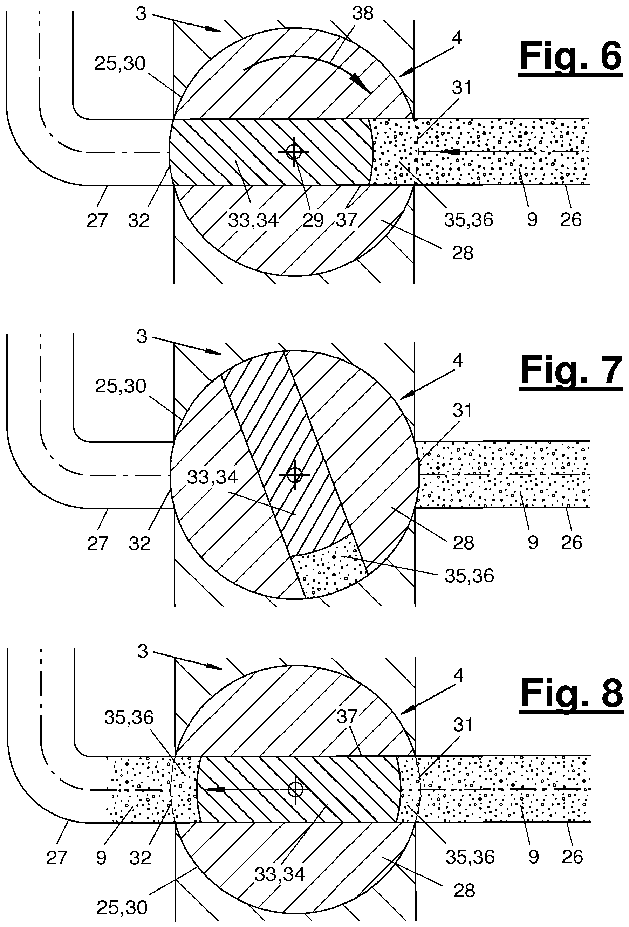

Figur 6 bis 8 verdeutlichen die Wirkungsweise der in Figur 1 und 2 dargestellten Dosiervorrichtung (4). Wenn gemäß Figur 6 die Mündungs- oder Einlassöffnung (31) zur Deckung mit einer Zuführleitung (26) kommt, wird durch den Fluiddruck (P) eine Materialportion (35) in der durch einen Pfeil verdeutlichten Fließrichtung vorwärts geschoben. Diese verdrängt den z.B. in Axialrichtung frei beweglich gehaltenen Stößel (34) im Aufnahmekanal (37) und bildet dadurch die Aufnahmetasche (36). Die Stößelbewegung ist in geeigneter Weise, z.B. durch einen internen Anschlagstift oder dergleichen begrenzt, sodass die andere Stößelstirnseite mit der Mündungsöffnung (32) korreliert. Die Stirnseiten des z.B. als zylindrischer Stift ausgebildeten Stößels (34) können eine Verrundung entsprechend der Außenkontur des Drehkörpers (28) haben.

Im weiteren Drehweg gemäß Figur 7 wird die Aufnahmetasche (36) durch die Gehäusewandung (30) verschlossen und die Materialportion (35) am Austritt gehindert. Nach einer Drehung um 180° fluchten wieder die Mündungsöffnungen (31, 32) mit der zugehörigen Zuführ- und Abführleitung (26,27). Der auf der Zuleitungsseite anstehende Materialdruck drückt gegen die hintere Stirnseite des Stößels (34) und verschiebt diesen in Pfeilrichtung, wodurch eine neue Aufnahmetasche (36) gebildet wird und zugleich auf der gegenüberliegenden Seite die Materialportion (35) aus der bisherigen Aufnahmetasche (36) in die Abführleitung (27) ausgeschoben wird. Der vorbeschriebene Dosierprozess beginnt dann von neuem.

Bei einer Mehrfachanordnung und einem Winkelversatz von Aktoren (33), insbesondere bei der gezeigten gekreuzten Ausrichtung, wirken diese zeitversetzt, wodurch die Dosierung und der portionsweise Materialaustrag vergleichmäßigt werden.

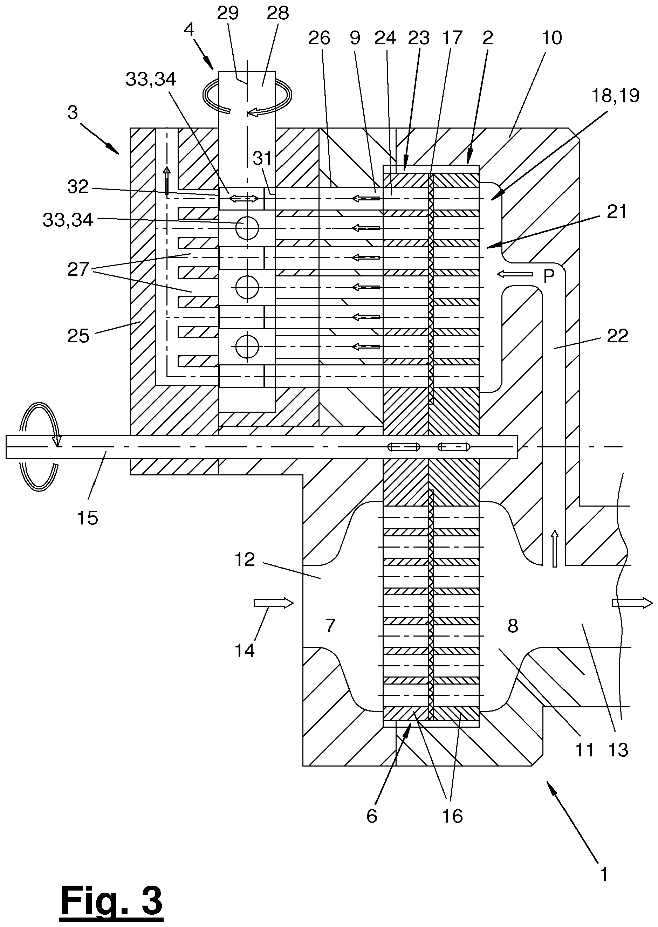

Figur 3 zeigt eine Variante der Filtereinrichtung (1) und der Reinigungsvorrichtung (2), die weitgehend mit dem ersten Ausführungsbeispiel von Figur 1 und 2 übereinstimmen. Unterschiede bestehen in der Ausbildung des Filters (6) und der räumlichen Trennung des Reinigungsbereichs (21) von einer oder mehreren Filterkammern (11). Zumindest eine Filterkammer (11) ist hierbei über einen Rückführkanal (22) mit dem Reinigungsbereich (21) strömungstechnisch und zur Überleitung des Fluiddrucks (P) verbunden.

Der Scheibenfilter (6) weist in diesem Ausführungsbeispiel ebenfalls einen aus z.B. zwei parallelen gelochten Stützscheiben gebildeten Filterträger (16) mit mindestens einem dazwischen angeordneten Filterelement (17) auf. Die Lochanordnung an den Stützscheiben und das Filterelement (17) können ringförmig und konzentrisch zur Achse (15) ausgebildet sein. In einer anderen Ausführungsform kann der Filter (6) segmentiert sein, wobei die Stützscheiben mehrere rund um die Achse (15) gleichmäßig verteilte und voneinander durch massive Wandabschnitte getrennte Lochbereiche aufweist. Das Filterelement (17) kann dementsprechend in mehrere, an die Lochbereiche angepasste und entsprechend verteilte Segmente unterteilt sein.

Die Filtereinrichtung (1) kann mehrere konzentrisch um die Achse (15) verteilt angeordnete Filterkammern (11) und einen hiervon räumlich distanzierten und über mindestens einen Rückführkanal (22) angebundenen Reinigungsbereich (21) aufweisen.

Die Ablöseeinrichtung (18) der Reinigungsvorrichtung (2) ist wieder als Rückspüleinrichtung (19) ausgebildet und stationär angeordnet. Sie weist auf der Verschmutzungsseite auch den genannten Sammelbereich (23) auf, der hier in eine größere Zahl von Sammelkanälen (24) als beim ersten Ausführungsbeispiel unterteilt ist. Die Zahl der Zu- und Abführleitungen (26,27) der Austragvorrichtung (3) ist entsprechend geändert und angepasst. Gleiches gilt für die Zahl und Anordnung der Aufnahmetaschen (36) und der Aktoren (33) am Drehkörper (28). Die Funktion ist ansonsten die gleiche wie im ersten Ausführungsbeispiel.

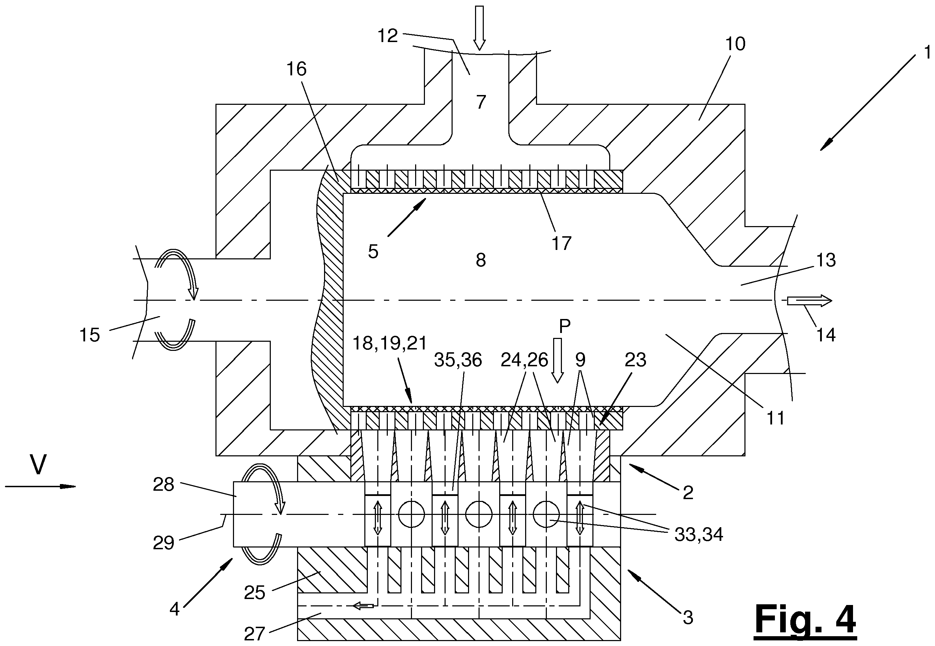

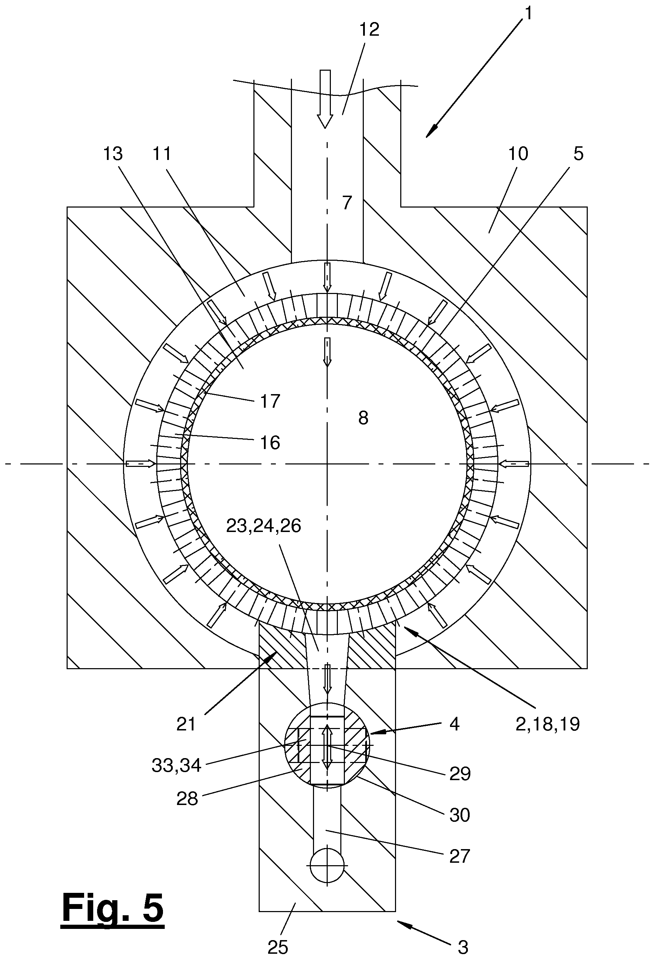

Figur 4 und 5 zeigen eine weitere Variante der Filtereinrichtung (1) und der Reinigungsvorrichtung (2), bei der ein Filter (5) in Form eines Rohrfilters eingesetzt wird. Dieser wird im gezeigten Ausführungsbeispiel vom ungefilterten Fluid (7) von außen aus einer Ringkammer nach innen durchströmt, wobei im Reinigungsbereich (21) die Filterrückstände (9) radial nach außen abgegeben werden.

Der wiederum drehbar um eine Achse (15) gelagerte Rohrfilter (5) weist einen Filterträger (16) in Form eines an einer Stirnseite offenen Zylinders mit einem gelochten Mantel und einer Abstützung nebst Zapfenanordnung an der anderen Stirnseite auf. Das Filterelement (17) ist z.B. an der Innenseite des Lochzylinders (16) angeordnet und weist eine Ringform auf. Es kann z.B. als Ringkartusche aus einem gelochten Siebband gebildet sein.

Der Sammelbereich (23) ist wieder in mehrere Sammelkanäle (24) unterteilt, die im Gegensatz zur axialen Ausrichtung der ersten beiden Varianten hier einer radiale Ausrichtung haben. Figur 4 und 5 zeigen hierbei auch die Möglichkeit, die Sammelkanäle (24) und die Zuführleitungen (26) zusammenzulegen, wobei die Austragvorrichtung (3) entsprechend in das Gehäuse (10) der Filtereinrichtung (1) integriert ist. Die Austragvorrichtung (3) und die Dosiereinrichtung (4) haben ansonsten die gleiche prinzipielle Ausbildung wie in der vorgenanten Ausführungsbeispielen, wo bei entsprechender Filterform die Ausrichtung und Anordnung am Filtergehäuse (10) abgeändert ist. In diesem Ausführungsbeispiel sind die Achsen (15,29) parallel zueinander ausgerichtet. In den ersten beiden Ausführungsformen haben sie eine gekreuzte Anordnung.

Die Dosiereinrichtung (4) kann steuerbar ausgebildet sein. Hierfür gibt es verschiedene Möglichkeiten. Zum einen kann die Drehbewegung und Drehgeschwindigkeit des Dosierelements (28) bzw. des Drehkörpers mittels des Drehantriebs (38) gesteuert werden. Zum anderen kann ggf. die Größe der Aufnahmetasche (35) gesteuert werden, z.B. über den Stößelhub. Die Steuerung kann dabei in Abstimmung mit der Filterdrehung erfolgen. In weiterer Ausbildung kann in Verbindung mit einer entsprechende Sensorik auch eine Regelung vorhanden sein.

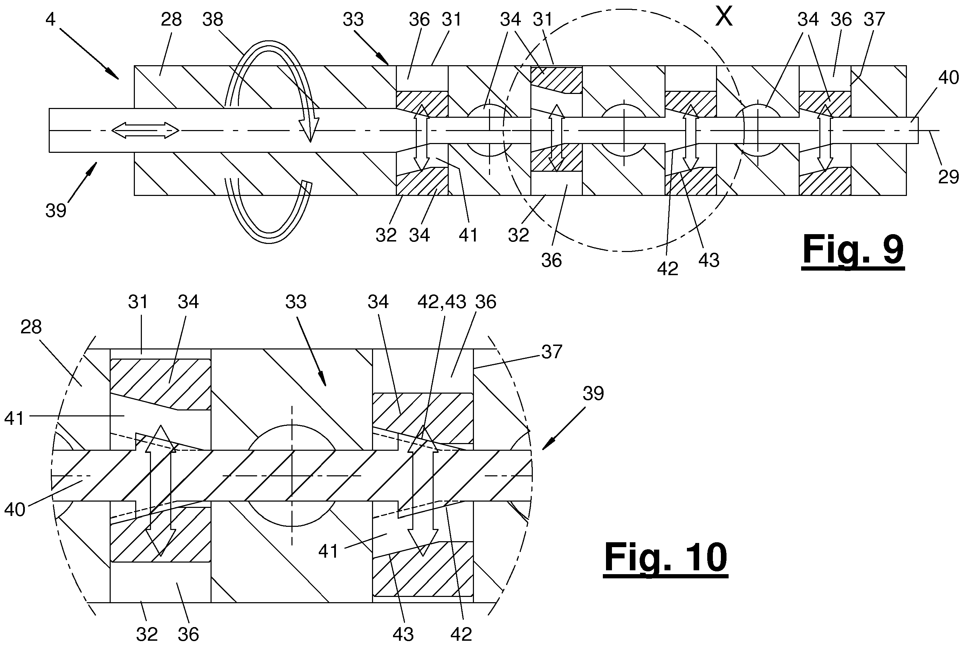

Figur 9 und 10 verdeutlichen eine Variante einer Dosiereinrichtung (4), in der der Aktor (33) eine Stelleinrichtung (39) zur Veränderung des Stößelhubs aufweist. Die Stelleinrichtung (39) besitzt hierfür ein axial bewegliches Stellelement (40), das z.B. als Stellstange ausgebildet ist und das sich längs und bevorzugt fluchtend mit der Drehachse (29) erstreckt. Es kann von einem nicht dargestellten Antrieb in der Axialrichtung gesteuert vor und zurück bewegt werden.

Die ein oder mehreren Stößel (34) weisen ein zugehöriges Stellelement (41) auf, welches z.B. als Stellöffnung ausgebildet ist, die zumindest bereichsweise die Stellstange (40) mit einem dem Stößelhub entsprechenden Übermaß umgibt. Die Stellelemente (40,41) können einen kreisrunden Querschnitt aufweisen. Die Stellöffnung (41) kann auch als Langloch und die Stellstange (40) im Öffnungsbereich als Flachstab ausgeführt sein.

Die Stellelemente (40,41) weisen aufeinander abgestimmte und zusammenwirkende Stellflächen (42,43) auf, die je nach Axialstellung der Stellstange (40) den Stößelhub bestimmen. Die Stellflächen (42,43) sind z.B. als umfangseitig begrenzte Keilfläche oder als umlaufender Konus ausgebildet. Die schrägen Stellflächen (42,43) können in Axialrichtung im Stößelbereich nur stellenweise vorhanden sein und eine gegenseitig angepasste Neigung gegen die Drehachse (29) haben. Das Stellelement (40) kann ggf. mehrere Stößel (34) axial durchsetzen und kann entsprechend der Stößelzahl mehrere Stellflächen (42) aufweisen.

Figur 10 verdeutlicht in einer vergrößerten Darstellung die Wirkungsweise. Die in Figur 9 gezeigte Ausgangsstellung ist hierbei gestrichelt dargestellt. In der Ausgangsstellung der Stellstange (40) können sich die Stößel (34) zur Bildung der jeweiligen Aufnahmetasche (36) maximal an die Drehachse (29) annähern und haben hierdurch einen Maximalhub. Die Stellöffnung (41) hat einen gegenüber der Stellstange (40) entsprechend des gewünschten Stößelhubs bemessene Öffnungsweite. Beim Maximalhub und maximaler Taschengröße schließen die jeweils gegenüberliegenden Stirnseiten der Stößel (34) bündig mit der Mündungsöffnung (32) ab.

Wird gemäß Figur 10 die Stellstange (40) ein Stück axial vorwärts bewegt, so dass die Stellflächen (42) tiefer in die jeweilige Stellöffnung (41) eindringen, wird der Hubweg der Stößel (34) durch früheren Anschlag der Stell- bzw. Keilflächen (42,43) begrenzt. Die Stellstange (40) kann zur Veränderung des Stößelhubs in Stufen oder stufenlos verstellt werden.

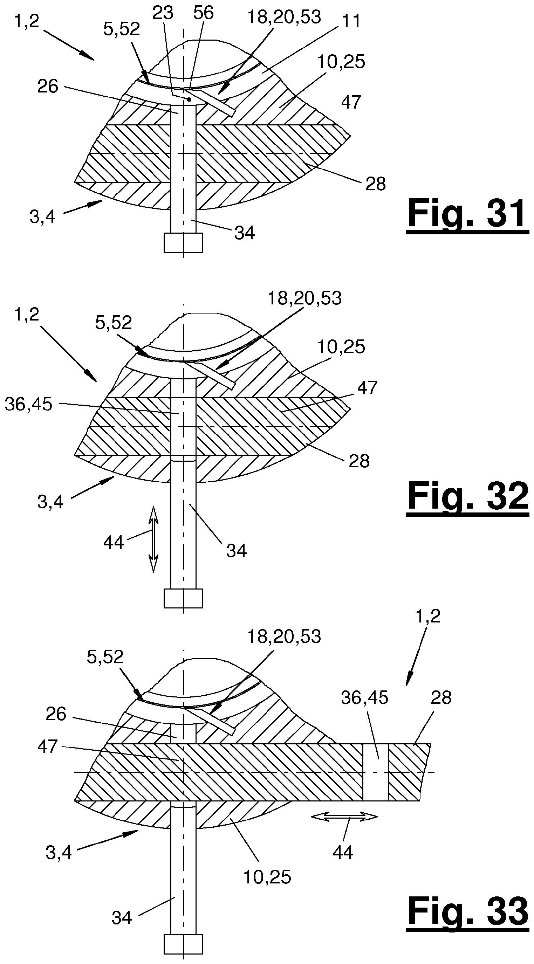

In einer weiteren, nicht dargestellten Ausführungsform kann der Aufnahmekanal (37) als einseitig offener Sackkanal ausgebildet sein, wobei der Aktor (33) ein auf den Stößel (34) einwirkendes Antriebsmittel aufweist, welches in Abhängigkeit von der Drehstellung des Drehkörpers (28) um die Achse (29) und entsprechend der Anordnung der Leitungen (26,27) gesteuert wird. Die Zuführ- und Abführleitung (26,27) können bei dieser Variante eine nicht-fluchtende Ausrichtung haben. Außerdem können mehrere solcher Leitungen (26,27) verteilt am Umfang des Drehkörpers (28) und des Aktors (33) angeordnet sein. Das Antriebsmittel erzeugt gesteuert eine Druckkraft und schiebt den Stößel (34) mitsamt der Materialportion (35) aus. Wenn das Antriebsmittel kraftlos geschaltet ist, kann der Fluiddruck (P) den Stößel (34) zurückdrängen und die Aufnahmetasche (36) bilden. In einer Abwandlung dieser Variante kann der Aktor (33) bzw. das Antriebsmittel den Stößel ersetzen und selbst den Taschenboden bilden. Figur 31 bis 33 und 36, 37 zeigen hierfür konstruktive Ausgestaltungen

In einer anderen Variante kann die Aufnahmetasche (36) durch einen flexiblen Hohlkörper, z.B. eine Blase, gebildet werden, die den Stößel ersetzt und die durch ein Antriebsmittel zur Volumenänderung beaufschlagt und z.B. kontrahiert bzw. zusammengepresst wird. Hierdurch kann die enthaltene Materialportion (35) ausgetrieben werden. Die Ausbildung und Funktionsweise kann ähnlich wie bei Tintenstrahldruckern sein.

Ein Antriebsmittel kann in beliebig geeigneter Weise ausgebildet sein und angesteuert werden. Es kann z.B. ein fluidisches Antriebsmittel mit Kraftübertragung durch ein Druckgas oder durch eine Flüssigkeit ausgebildet sein, welche den als Kolben fungierenden Stößel (34) bei Kraftaufschaltung um einen begrenzten Weg ausschiebt. Ferner ist es möglich, den Stößel (34) als flexible Blase auszubilden, die im Aufnahmekanal (37) angeordnet ist und die mit einem fluidischen Druckmittel bedarfsweise gefüllt wird, wobei sie sich unter Verkleinerung des Taschenvolumens ausdehnt. Die zu den verschiedenen Aktoren (33) bzw. Antriebsmitteln führenden Versorgungsleitungen für ein fluidisches Druckmittel können im Drehkörper (28) verlegt sein. An einer Umfangslinie des Drehkörpers (28) können mehrere Aufnahmetaschen (36) und mehrere vom gleichen oder von unterschiedlichen Antriebsmitteln beaufschlagte Stößel (34), Blasen oder dgl. vorhanden sein.

In einer weiteren Abwandlung kann ein Antriebsmittel als elektromagnetisches Expansionsmittel, z.B. als PiezoElement, ausgebildet sein. Es kann auf einen dünnen kolbenartigen Stößel (34) einwirken oder selbst den Taschenboden bilden. Es kann über eine entsprechende Leitungsführung im Drehkörper (28) elektrisch von einer entsprechenden Steuerung angesteuert werden.

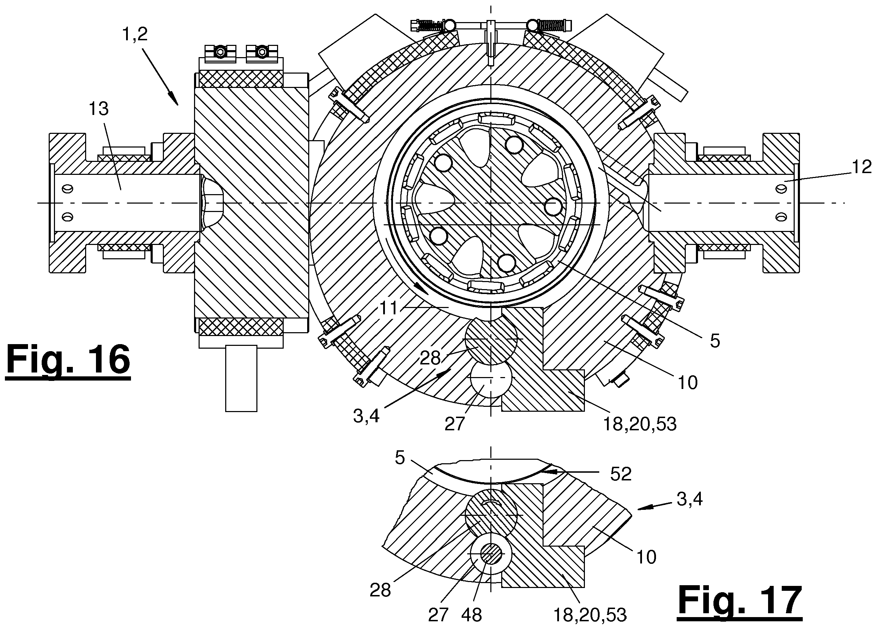

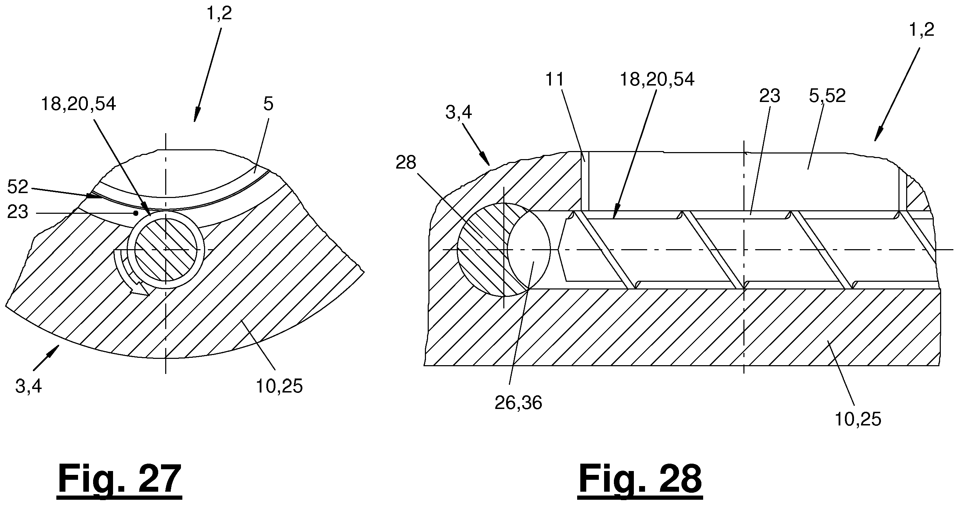

In einer weiteren, nicht dargestellten und nicht unter Anspruch 1 fallenden Variante, kann eine Reinigungsvorrichtung (2) eine Ablöseeinrichtung (19) aufweisen, die als mechanische Trenneinrichtung (20) ausgebildet ist. Die Trenneinrichtung (20) kann z.B. die Form eines Schabers oder Abhebers haben. Figur 16 bis 26 und 29 bis 38 zeigen beispielhaft solche nicht unter Anspruch 1 fallenden Schaber oder Abheber. Die Austragvorrichtung weist in diesem Fall z.B. eine drehbare Schneckenwelle auf, die in der Zuleitung (26) angeordnet ist, wobei an deren Ende eine Dosiereinrichtung (4) der vorbeschriebenen Art angeordnet ist. Auf die Schneckenwelle kann auch verzichtet werden, wobei die vom Schaber abgehobenen Filterrückstände durch den Fluiddruck aus dem Filterraum zur Dosiereinrichtung (4) befördert werden. Bei einer abgewandelten Ausführungsform kann statt eines blattartigen Schabers auch eine drehende Schneckenwelle oder ein anderes Trennmittel vorhanden sein, welches die Filterrückstände (9) mechanisch vom Filterelement (17) abhebt und zu einer Zuführleitung (26) hin leitet. Eine solche Schneckenwelle kann z.B. gemäß Figur 27 und 28 ausgebildet sein. Das Filterelement (27) kann hierbei ebenfalls beliebig ausgebildet sein und kann insbesondere eine Scheiben- oder Rohrform haben.

Eine Dosiereinrichtung (4) der vorbeschriebenen Art, insbesondere mit einer Stelleinrichtung (39) oder einer alternativen Ausbildung des oder der Aktoren (33) kann auch direkt an einem Filter (5,6) angeordnet sein. Sie kann dabei in der Wandung des Filtergehäuses (11) angeordnet sein und kann mit ihrem Drehkörper auch in die Filterkammer (11) bzw. den Reinigungsbereich (21) ragen. Eine Zuführleitung (26) kann dabei entfallen, so dass die ggf. von einer nicht unter Anspruch 1 fallenden mechanischen Trenneinrichtung (20) abgehobenen und aufgestauten Filterrückstände (9) direkt in die Aufnahmetaschen (36) des Drehkörpers (28) befördert werden. Die Dosiereinrichtung (4) kann bei dieser Variante bevorzugt Aktoren (33) mit Winkelversatz und ggf. mit den vorbeschriebenen Antriebsmitteln aufweisen.

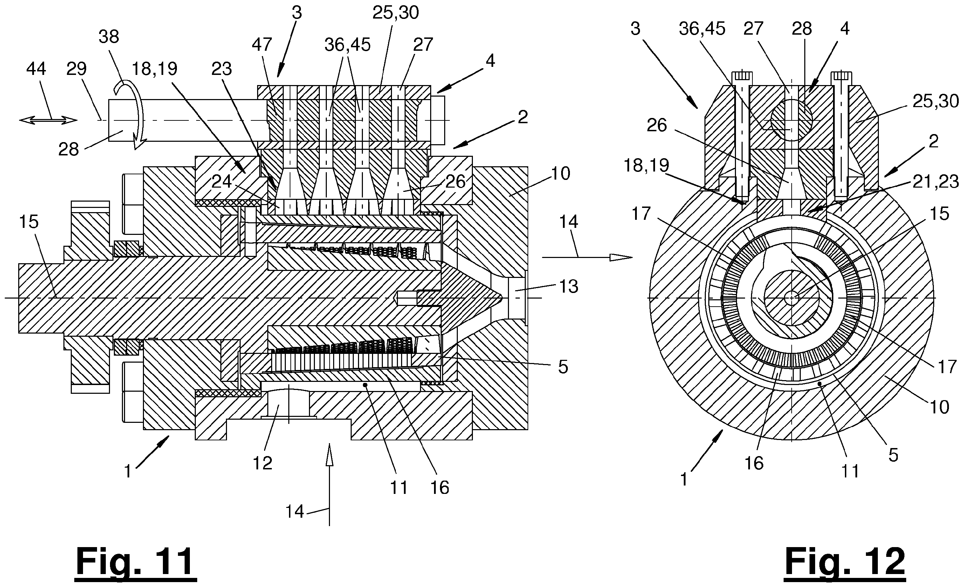

In weiterer Abwandlung der Ausführungsbeispiele von Figur 1 bis 5 kann der Austrag der abgelösten Filterrückstände auch im Strom erfolgen, wobei die Dosiereinrichtung (4) und das Dosierelement (28) entsprechend anders ausgebildet sind, z.B. gemäß Figur 11, 12 oder 25, 26. Der Transport der abgelösten Filterrückstände kann dabei durch den Fluiddruck (P) getrieben werden.

Figur 11 und 12 zeigen im Längs- und Querschnitt eine weitere Abwandlung einer Filtereinrichtung (1) mit einem Filter (5), einer Reinigungsvorrichtung (2) und einer Austragvorrichtung (3) mit einer Dosiereinrichtung (4). Die Austrag- und Dosiereinrichtung (3,4) können mehrfach und verteilt am Filter (5) angeordnet sein. Die Reinigungsvorrichtung (2) und die Austragvorrichtung (3) mit der Dosiereinrichtung (4) können integraler Bestandteil der Filtereinrichtung (1) sein. Sie können alternativ eigenständige und anbaubare Vorrichtungen sein, die ggf. auch nachgerüstet werden können. Die Ausgestaltung gilt auch für die anderen nachfolgend beschriebenen Varianten.

Der Filter (5) ist im Ausführungsbeispiel von Figur 11 und 12 als Rohrfilter ausgebildet. Er wird radial von außen aus einer Ringkammer nach innen vom Fluid durchströmt. Der Filter (5) kann um eine Achse (15) drehbar gelagert sein und kann während des Filterprozesses und des Fluiddurchtritts um diese Achse (15) rotieren. Die Achse (15) kann einen steuerbaren Drehantrieb (nicht dargestellt) aufweisen. Die Drehung und die Filterung können kontinuierlich erfolgen. Die Drehgeschwindigkeit kann an unterschiedliche Fluide und an unterschiedliche Betriebserfordernisse, z.B. variierende Fluidmengen, Drücke, Temperaturen, Feststoffbelastungen etc. angepasst werden.

Der Rohrfilter (5) weist einen Filterträger (16) in Form eines an einer Stirnseite offenen Zylinders mit einem gelochten Mantel und einer Abstützung nebst Zapfenanordnung an der anderen Stirnseite auf. Das Filterelement (17) ist z.B. an der Innenseite des Lochzylinders (16) angeordnet und weist eine Ringform auf. Es kann z.B. als Ringkartusche aus einem gelochten Siebband gebildet sein.

Die Reinigungsvorrichtung (2) dient zum Ablösen der vorerwähnten Filterrückstände und weist eine Ablöseeinrichtung (18) auf, die im Ausführungsbeispiel von Figur 11 als Rückspüleinrichtung (19) ausgebildet ist. Die Filterrückstände werden dabei mit dem auf der Reinseite des Filters (5) wirkenden Fluiddrucks (P) abgelöst.

Bei der gezeigten Ausführungsform von Figur 11 und 12 kann die Reinigungsvorrichtung (2) während des Filterprozesses bevorzugt kontinuierlich, alternativ diskontinuierlich bzw. intermittierend, wirken. Sie ist dabei der Filterkammer (11) bzw. dem Prozessraum zugeordnet und weist dort einen Reinigungsbereich (21) auf, durch den der drehende Filter (5) z.B. permanent hindurchbewegt wird.

Auf der Reinigungsseite des Filters (5), insbesondere des Filterelements (17), befindet sich ein Sammelbereich (23) für die abgelösten Filterrückstände. Der Sammelbereich (23) kann sich innerhalb der Filterkammer (11) befinden und gegen diese in geeigneter Weise abgedichtet sein. Die Dichtung verhindert ein Austreten der abgelösten Filterrückstände in den Bereich des zu filternden Fluids.

Der Sammelbereich (23) schließt auf der einen Seite an den Filter (5), insbesondere den zugewandten gelochten Filterträger (16) dicht an. Auf der anderen Abströmseite schließt der Sammelraum (23) an die Austragvorrichtung (3) an. Der Sammelbereich (23) kann ein einteiliger und von der Dichtung umgebener Raum sein. Im gezeigten Ausführungsbeispiel ist der Sammelbereich (23) in mehrere parallele Sammelkanäle (24) unterteilt. Deren Verteilung kann mit der Lochverteilung am Mantel des Filterträgers (16) übereinstimmen. Die Reinigungsvorrichtung (2) und der Sammelbereich (23) sind im gezeigten Ausführungsbeispiel stationär angeordnet. Während der Filterdrehung kommen dadurch die Mantellöcher und die Sammelkanäle (24) immer wieder zur Deckung, sodass ein Durchströmen der abgelösten Filterrückstände (9) möglich ist.

Die Austragvorrichtung (3) ist im unmittelbaren Anschluss an die Reinigungsvorrichtung (2) angeordnet und weist eine oder mehrere Zuführleitungen (26) auf, die entsprechend des Sammelbereichs (23) bzw. der Sammelkanäle (24) angeordnet und ausgerichtet sind und an diese für eine Strömungsverbindung fluchtend anschließen.

Im gezeigten Ausführungsbeispiel ist ein direkter Anschluss vorhanden. In einer anderen Ausführungsform kann die Austragvorrichtung (3) örtlich getrennt und distanziert von der Reinigungsvorrichtung (2) sowie der Filtereinrichtung (1) angeordnet sein, wobei eine Überbrückungs- oder Verlängerungsleitung zur Verbindung mit dem Sammelbereich (23) bzw. den Sammelkanälen (24) vorhanden ist. Die Austragvorrichtung (3) ist in der gezeigten Ausführungsform von Figur 11 und 12 und in der vorgenannten Variante stationär angeordnet und z.B. am Filtergehäuse (1) montiert.

Die Austragvorrichtung (3) weist im Anschluss an die einen oder mehreren Zuführleitungen (26) eine Dosiereinrichtung (4) mit einem beweglichen Dosierelement (28) auf. Die Dosiereinrichtung (4) kann die Zuführleitung(en) (26) in Ausströmrichtung absperren und einen unerwünschten Austritt von Filterrückständen verhindern. Andererseits ist die Dosiereinrichtung (4) derart ausgestaltet, dass sie die abgelösten Filterrückstände wahlweise im Strom oder portionsweise aus der oder den Zuführleitungen (26) aufnimmt und an einer anderen, örtlich getrennten Stelle wieder abgibt. Hierfür sind eine oder mehrere Abführleitungen (27) im Gehäuse (25) angeordnet, welche den Materialstrom oder die Materialportionen der Filterrückstände aufnehmen, ggf. in einem Sammelkanal zusammenführen und dann aus der Austragvorrichtung (3) ausleiten. Die einfach oder mehrfach vorhandenen Zuführ- und Abführleitungen (26,27) können in einer entsprechenden Zahl und Anordnung vorhanden sein.

Die Dosiereinrichtung (4) ist zwischen der oder den Zuführleitungen (26) und der oder den Abführleitungen (27) im Gehäuse (25) angeordnet. Die Dosiereinrichtung (4) ist steuerbar.

Die Dosiereinrichtung (4) weist ein längs einer zentralen Achse (29) und bevorzugt auch parallel zur Filterachse (15) verschieblich gelagertes Dosierelement (28) auf, das z.B. als zylindrischer Stößel oder als Welle ausgebildet ist. Alternativ kann das Dosierelement (28) eine abgeflachte Balkenform haben. Die Dosiereinrichtung (4) kann einen steuerbaren Antrieb (44), insbesondere einen Schiebeantrieb, für das Dosierelement (28) aufweisen, der durch einen Pfeil symbolisiert ist. Zusätzlich oder alternativ kann ein ebenfalls symbolisierter Drehantrieb (38) vorhanden sein. In weiterer Abwandlung kann auf motorische Antriebe (38,44) verzichtet und das Dosierelement (28) manuell verstellt werden. Der steuerbare Antrieb (44) kann auch einen steuerbaren Aktor (33) gemäß der Ausführungsbeispiele von Figur 9 und 10 bilden.

Die Dosierung des Materialaustrags wird über die Schiebestellung und/oder Drehstellung des Dosierelements (28) gesteuert. Der oder die Antrieb(e) (44,38) können auf den Drehantrieb bzw. die ggf. veränderliche Drehgeschwindigkeit des Filters (5) abgestimmt sein.

Das Dosierelement (28) weist an seinem Korpus eine oder mehrere Aufnahmetaschen (36) auf, die in dieser Variante als den Korpus durchsetzende und endseitig offene Querkanäle (45) ausgebildet sind. Ihre Zahl, Größe und Anordnung kann sich nach der Zahl, Größe und Anordnung der Zuleitungen (26) und ggf. Abführleitungen (27) richten. Die Leitungen (26,27) und die Querkanäle (45) haben bevorzugt die gleiche Ausrichtung. Die voneinander axial beabstandeten Querkanäle (45) sind durch massive Bereiche (47) des Dosierelements (28) getrennt.

Das Dosierelement (28) ist ansonsten von der Wandung (30) des Gehäuses (25) mit Ausnahme der Anschlussstellen von Zuführleitung(en) (26) und Abführleitung(en) (27) dicht umgeben. Es kann den direkten Durchfluss zwischen der oder den Zuführ- und Abführleitung(en) (26,27) sperren, dosieren bzw. drosseln oder freigeben. In Sperrstellung verhindert es einen Durchtritt von äußeren Umgebungseinflüssen aus der oder den Abführleitung(en) (27) in den Sammelbereich (23) und weiter in den Filterraum (11).

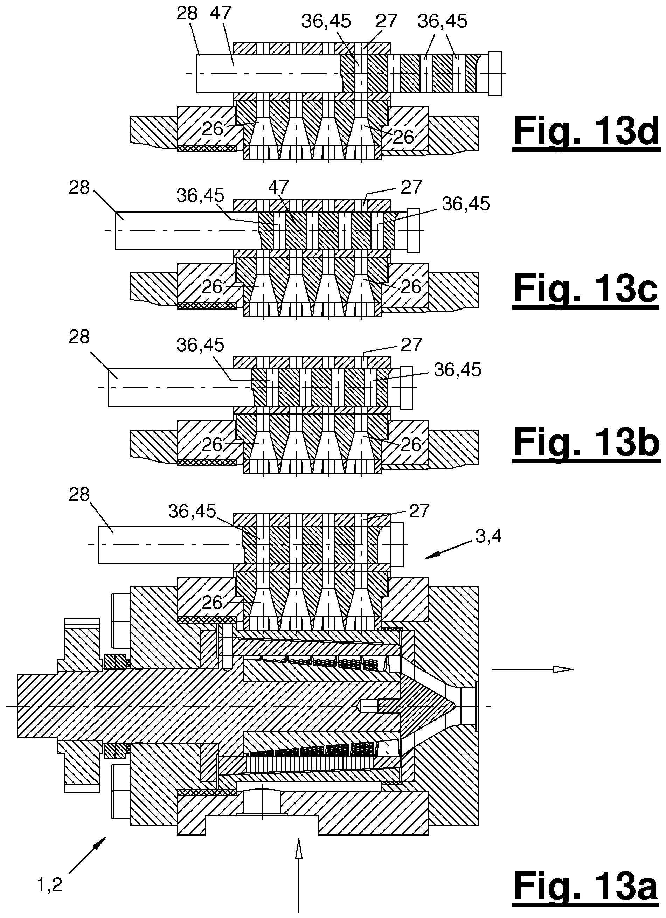

Figur 13a - d zeigen die Dosiereinrichtung (4) in verschiedenen Betriebsstellungen.

Figur 13a entspricht der Darstellung von Figur 11 und zeigt die komplette Filtereinrichtung (1). In der Betriebs- und Offenstellung von Figur 13a schließen alle Querkanäle (45) fluchtend an die Zuführ- und Abführleitungen (26,27) an und erlauben den maximalen Durchfluss eines Materialstroms.

In der Betriebs- und Drosselstellung von Figur 13b ist das Dosierelement (28) ein Stück längs der Achse (29) verschoben, sodass die Querkanäle (45) und die Zuführ- und Abführleitungen (26,27) sich nur noch teilweise überdecken. Dementsprechend verringern sich Durchflussquerschnitt und Durchflussmenge der abgelösten Filterrückstände.

In der Betriebs- und Sperrstellung von Figur 13c sind die Querkanäle (45) mit Abstand seitlich zu den Zuführ- und Abführleitungen (26,27) versetzt, wobei deren Öffnungen durch die massiven Bereiche (47) verschlossen sind.

Figur 13d zeigt eine weitere Dosiermöglichkeit mit einem verlängerten Dosierelement (28). Dieses ist so weit zur Seite verschoben, dass nur noch ein Querkanal (45) mit einer Zuführ- und Abführleitung (26,27) gekoppelt ist. Die anderen Zuführ- und Abführleitungen (26,27) sind durch den verlängerten massiven Bereich (47) verschlossen. Je nach Schiebestellung kann somit die Zahl der am Materialaustrag beteiligten Querkanäle (45) verändert werden.

In einer anderen, nicht dargestellten Variante kann das wellenartige Dosierelement (28) um die Achse (29) gedreht werden. Hierdurch kann ebenfalls die Durchflussverbindung der Querkanäle (45) mit den Zuführ- und Abführleitungen (26, 27) beeinflusst werden. Figur 12 zeigt die fluchtende Durchflussstellung. Bei einer Drehung um z.B. 90° wird eine Sperrstellung durch den massiven Bereich (47) und bei Weiterdrehung um 90° erneut eine Durchflussstellung erreicht.

Das Dosierelement (28) kann in der vorbeschriebenen Weise kontinuierlich oder intermittierend den Durchfluss der abgelösten Filterrückstände freigeben und dosieren. Außerdem ist eine Portionierung möglich. Wenn die an beiden Enden offene Aufnahmetasche (36) bzw. der Querkanal (45) im befüllten Zustand in eine Sperrstellung verschoben und/oder gedreht wird, wird die enthaltene Materialportion eingeschlossen und bei der nächsten Einnahme einer Durchgangs- oder Durchflussstellung vom Materialdruck (P) und dem nachfließenden Rückstandsmaterial wieder ausgeschoben. Zugleich wird die Aufnahmetasche (36) bzw. der Querkanal (45) erneut befüllt und kann dann durch eine neuerliche Schiebe- oder Drehbewegung verschlossen werden. Auf diese Weise kann ein getakteter und portionsweiser Materialaustrag erfolgen.

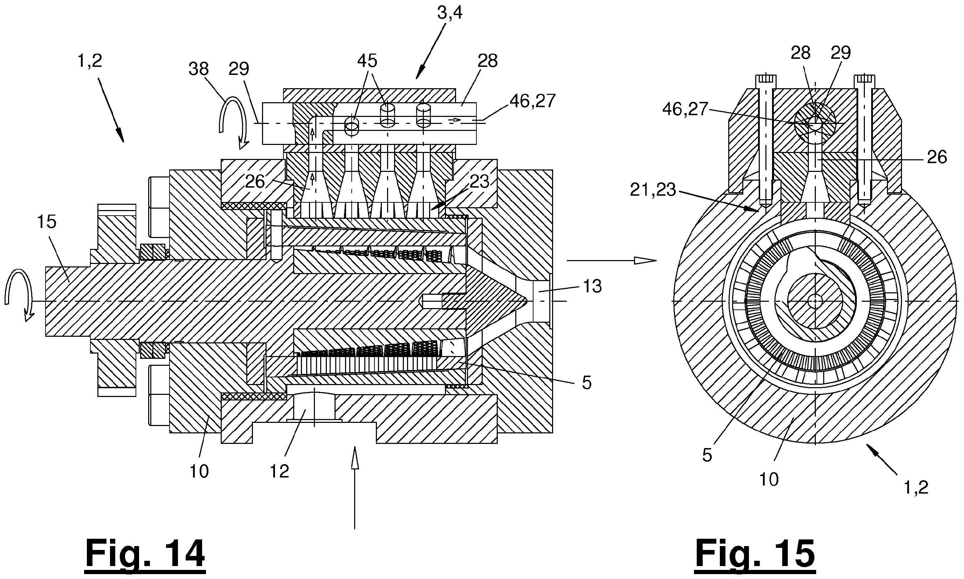

Figur 14 und 15 zeigen eine erste Abwandlung einer Austragvorrichtung (3) und Dosiereinrichtung (4) von Figur 11 und 12. Die Filtereinrichtung (1) und die Reinigungsvorrichtung (2) können die gleiche Ausbildung wie in Figur 11 und 12 haben. Die Austragvorrichtung (3) weist wiederum ein oder mehrere an den Sammelbereich (23) anschließende Zuführleitungen (26) auf. Die Dosiereinrichtung (4) besitzt ein als Welle ausgebildetes Dosierelement (28), welches um eine zentrale Achse (29) mittels eines Drehantriebs (38) drehen kann. Es kann ggf. auch zusätzlich noch mit einem nicht dargestellten Schiebeantrieb axial verschoben werden.

Das Dosierelement (28) besitzt mehrere Aufnahmetaschen (36), die jeweils von einem verkürzten Querkanal (45) gebildet werden, der einerseits am Wellenmantel und andererseits an einem axialen gemeinsamen Zentralkanal (46) mündet. Die Querkanäle (45) sind in Umfangs- bzw. Drehrichtung bzgl. der Achse (29) zueinander versetzt angeordnet. Sie können dabei jeweils einer Zuführleitung (26) zugeordnet sein, mit der sie einmal je Drehung in Durchflussstellung gelangen. Über den Rest des Drehwegs wird die Zuleitung (26) durch den massiven Bereich (47) verschlossen. Der Zentralkanal (46) ist mit einer Abführleitung (27) verbunden oder kann diese bilden. Alternativ zu einem gemeinsamen Zentralkanal (46) können mehrere einzelne parallele und innenliegende axiale Kanäle vorhanden sein.

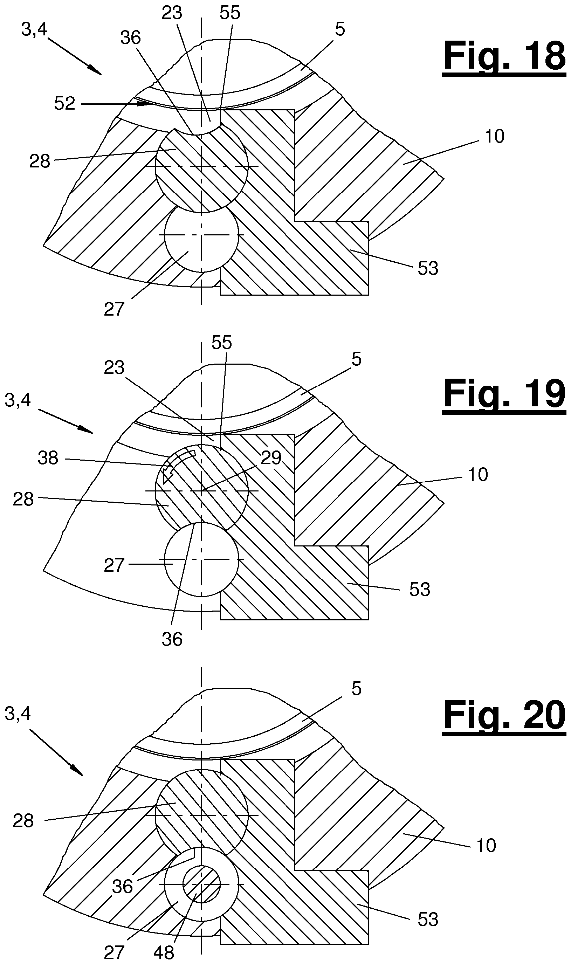

Figur 16 und 17 sowie die zugehörigen Detaildarstellungen von Figur 18 bis 20 zeigen eine zweite Abwandlung der Filtereinrichtung (1), der Reinigungsvorrichtung (2) und der Austragvorrichtung (3) nebst Dosiereinrichtung (4). Diese bewirkt einen portionsweisen Materialaustrag. Der Filter (5) ist hier wiederum als drehender Rohrfilter der eingangs beschriebenen Art ausgebildet und wird von außen nach innen durchströmt, wobei sich die Filterrückstände an seiner äußeren Filteroberfläche (52) ablagern.

Die Reinigungsvorrichtung (2) weist auch hier eine Ablöseeinrichtung (18) für die Filterrückstände auf, die in Abwandlung der vorgenannten Ausführungsbeispiele als eine nicht unter Anspruch 1 fallende mechanische Trenneinrichtung (20) ausgebildet ist. Die Trenneinrichtung (20) weist einen quer bzw. radial oder schräg gegen die Filteroberfläche (52) und gegen die durch einen Pfeil symbolisierte Filterdrehrichtung angestellten Schaber (53) auf, der die Filterrückstände abhebt. Der Schaber (53) ist bei dieser Variante als im Gehäuse (10) montierter Schabebalken mit einer massiven Schabekante (55) an einem Balkenrand ausgebildet ist, die relativ steil und fast radial gegen die drehende Filteroberfläche (52) angestellt ist.

Der Sammelbereich (23) wird bei der Trenneinrichtung (20) vor dem Schaber (53) gebildet. Die Dosiereinrichtung (4) ist in diesem Fall in das Gehäuse (10) der Filtereinrichtung (1) integriert und ragt in den Ringbereich der Filterkammeer (11), der den Filter (5) außenseitig umgibt. Die Dosiereinrichtung (4) weist wiederum ein bewegliches Dosierelement (28) auf, welches hier als drehende Welle ausgebildet und mit einem Drehantrieb (38) versehen ist. Das Dosierelement ragt in den besagten Ringbereich und steht unmittelbar mit dem Sammelbereich (23) in Verbindung. Die Austragvorrichtung (3) hat in diesem Fall nur eine Abführleitung (27).

Das längs des Filtermantels sich erstreckende Dosierelement (28) weist eine oder mehrere periphere Aufnahmetaschen (36) am Wellenmantel auf, die entsprechend der Drehbewegung getaktet mit Filterrückständen aus dem Sammelbereich (23) befüllt und an der Abführleitung (27) entleert werden. Die Aufnahmetasche(n) (36) ist/sind z.B. als axiale rinnenartige Ausnehmung oder Vertiefung am Wellenmantel ausgebildet. Das Dosierelement (28) wird an einer Seite bereichsweise dicht vom Schabebalken umgeben.

Der Staudruck im Sammelbereich (23) kann durch eine abgestimmte Formgebung und Anordnung des Dosierelements (28) und des Schabers (53) beeinflusst werden.

Das rotierende Dosierelement (28) nimmt gemäß Figur 16 und 18 in seiner Rinne (36) die von der Schabekante (55) abgelösten und im davor liegenden Sammelbereich (23) befindlichen Filterrückstände auf und transportiert sie bei der weiteren Drehung in Pfeilrichtung zu einer Abführleitung (27), die an das Dosierelement (28) peripher anschließt und sich parallel zu diesem entlang der Achse (15, 29) erstreckt. Figur 17, 19 und 21 zeigen die Abgabestellung, in der die Filterrückstände aus der Aufnahmetasche (36) in die bevorzugt direkt darunter liegende Abführleitung (27) fallen.

Die Taschenleerung kann gemäß Figur 17 und 20 unterstützt werden durch ein in der Abführleitung (27) angeordnetes Räumelement (48), welches z.B. als axial gesteuert verschieblicher Stößel oder Schaber oder als Förderschnecke ausgebildet ist. Die bevorzugt im Querschnitt kreisrunde Abführleitung (27) und ggf. das Räumelement (48) sowie die rinnenartige Aufnahmetasche (36) können eine gegenseitig angepasste Form und Krümmung aufweisen, wobei das Räumelement (48) in die Aufnahmetasche (36) mechanisch eingreift.

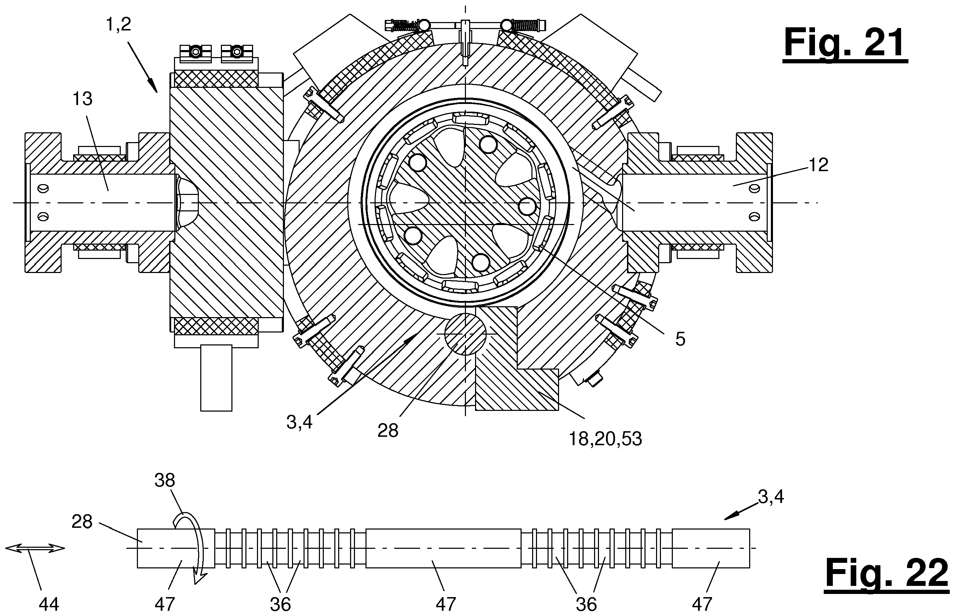

Figur 21 und 22 zeigen eine weitere Abwandlung der Austragvorrichtung (3) und Dosiereinrichtung (4), wobei die Filtereinrichtung (1) und die Reinigungsvorrichtung (2) mit der nicht unter Anspruch 1 fallenden Trenneinrichtung (20) und dem balkenförmigen Schaber (53) entsprechend des vorherigen Ausführungsbeispiels von Figur 16 und 17 ausgebildet sind.

Das Dosierelement (28) ist in der Variante von Figur 21 und 22 als axial verschieblicher und mittels eines gesteuerten Antriebs (44) bewegter Stößel ausgebildet. Dieser kann im Querschnitt eine kreisrunde Form haben. Er kann außerdem zusätzlich drehbar gelagert und ggf. mit einem Drehantrieb (38) versehen sein. Es ragt in den besagten Ringbereich der Filterkammer (11) und kann im Gehäuse (10) gelagert sein.

Das Dosierelement (28) weist mehrere Aufnahmetaschen (36) auf, die hier als ringartige Vertiefungen am Wellenmantel ausgebildet und durch Ringstege axial voneinander getrennt sind. Das Dosierelement (28) kann mehrere z.B. zwei axial voneinander beabstandete Taschenbereiche mit einem dazwischen angeordneten längeren massiven Bereich (47) aufweisen. An den Wellenenden können ebenfalls breitere massive Bereiche (47) angeordnet sein.

Durch eine reversierende Schiebebewegung werden abwechselnd die besagten Taschenbereiche und der zentrale massive Bereich (47) des Dosierelements (28) in Verbindung mit dem Sammelbereich (23) gebracht. Die abgelösten Filterrückstände werden in den ringartigen Aufnahmetaschen (36) aufgenommen. Die Aufnahmetaschen (36) sind zum Sammelbereich (23) hin geöffnet und werden ansonsten von der Wandung des Gehäuses (10) und des nicht unter Anspruch 1 fallenden Schabers (53) dicht umschlossen.

Das Dosierelement (28) wird anschließend axial verschoben, wodurch die gefüllten Aufnahetaschen (36) in einen nicht dargestellten Abgabebereich bzw. zu einer Abführleitung (27) transportiert werden, wo sie durch Schwerkraft oder mit evtl. Unterstützung durch ein Räumelement oder durch eine Spülung oder dgl. entleert werden. Währendessen können sich wahlweise der zentrale massive Bereich (47) oder der andere Taschenbereich am Sammelbereich (23) befinden. Mit dieser Variante einer Dosiereinrichtung (4) ist ebenfalls ein portionsweiser Materialaustrag gegeben.

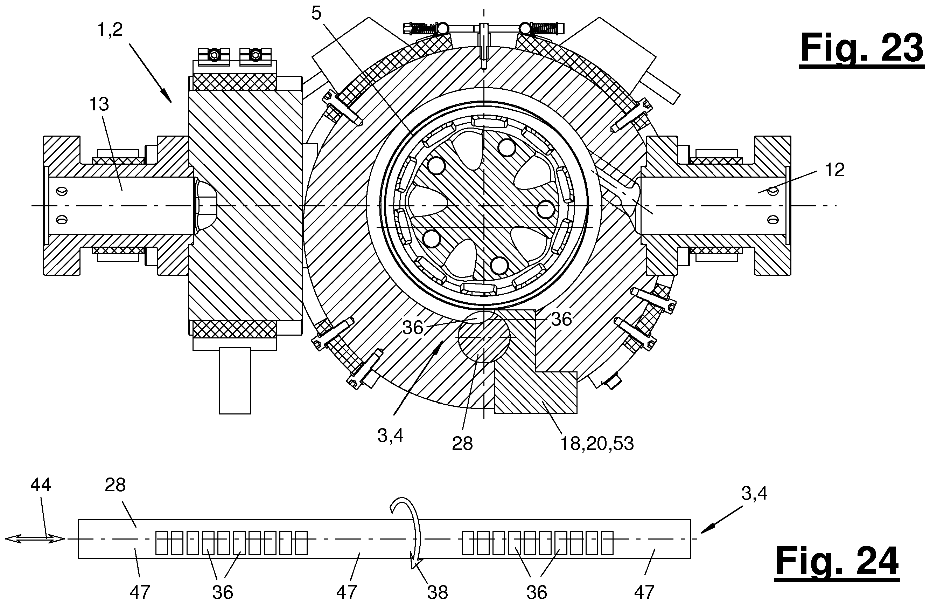

Die in Figur 23 und 24 gezeigte Abwandlung unterscheidet sich vom Ausführungsbeispiel von Figur 21 und 22 durch eine andere Form des Dosierelements (28). Dieses weist am Mantel mehrere axial hintereinander angeordnete kleinere Aufnahmetaschen (36) in Form von muldenartigen Vertiefungen auf. Auch hier sind zwei Taschenbereiche vorhanden, die von einem zentralen massiven Bereich (47) und von endseitigen massiven Bereichen begrenzt werden. Die muldenartigen Aufnahmetaschen (36) können in einer axialen Reihe hintereinander angeordnet sein. Eine solche Taschenform kann alternativ auch beim vorherigen Ausführungsbeispiel von Figur 16 und 17 eingesetzt werden.

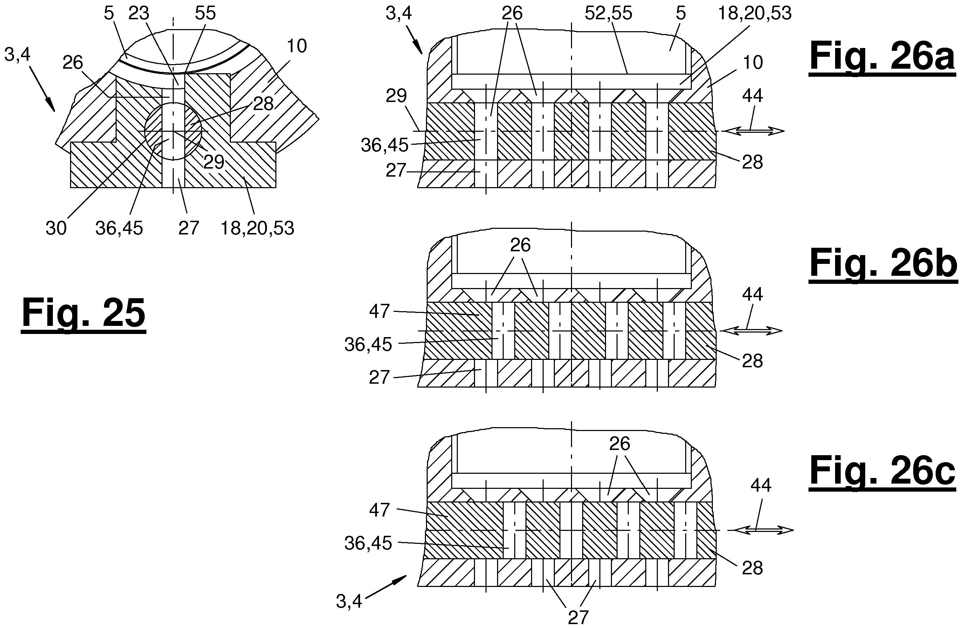

Figur 25 bis 26c zeigen eine weitere Variante einer Austragvorrichtung (3) nebst Dosiereinrichtung (4), die hier mit einer nicht unter Anspruch 1 fallenden mechanischen Trenneinrichtung (20), z.B. einem Schaber (53) gemäß der vorigen Ausführungsbeispiele von Figur 16 bis 24, kombiniert ist. Die Filtereinrichtung (1) ist ansonsten die gleiche wie in den vorigen Ausführungsbeispielen.

Das Dosierelement (28) ist ähnlich wie im ersten Ausführungsbeispiel von Figur 11 und 12 als verschiebliche Welle oder Stößel mit einem Schiebeantrieb (44) ausgebildet. Es weist eine oder mehrere Aufnahmetaschen (36) in Form von den Wellenkorpus durchsetzenden Querkanälen (45) auf, die eine gleiche oder unterschiedliche Winkelausrichtung haben können und die in Zahl, Größe und Ausrichtung mit anschließenden Zuführ- und Abführleitungen (26,27) korrespondieren. Durch axiales Verschieben kann das Dosierelement (28) verschiedene Betriebsstellungen gemäß Figur 26a - c einnehmen.

In Figur 26a ist die Durchfluss- oder Offenstellung gezeigt. In Figur 26b ist eine Drosselstellung mit nur teilweiser Überdeckung von Querkanälen (45) und Zuführ- und Abführleitungen (26,27) und entsprechend verringerter Durchflussmenge dargestellt. Figur 26c zeigt die Sperrstellung, in der die Zuführ- und Abführleitungen (26) durch massive Bereiche (47) verschlossen und abgesperrt sind.

Auch in der Variante von Figur 25 bis 26c kann das Dosierelement (28) zusätzlich oder alternativ eine Drehbewegung ausführen und hierfür einen entsprechenden Drehantrieb (38) aufweisen.

Figur 27 und 28 zeigen eine weitere Abwandlung der Reinigungsvorrichtung (2) und der Austragvorrichtung (3) sowie der Dosiereinrichtung (4). Die Ablöseeinrichtung (18) ist wiederum als nicht unter Anspruch 1 fallende mechanische Trenneinrichtung (20) ausgebildet und dabei konstruktiv als Schneckenförderer (54) ausgeführt. Dieser ist im Gehäuse (10) gelagert und erstreckt sich z.B. in Axialrichtung an und entlang der Filteroberfläche (52) des drehenden Rohrfilters (5). Der Schneckenförderer (54) hebt bei einer Drehung die Filterrückstände von der Filteroberfläche (52) ab und transportiert sie zu einer axial anschließenden Zuführleitung (26) im Gehäuse (10), die mit einem Dosierelement (28) der vorbeschriebenen Art in Verbindung steht. Dieses kann z.B. eine Welle oder ein Stößel mit ein oder mehreren peripheren Aufnahmetaschen (36) gemäß eines der vorbeschriebenen Ausführungsbeispiele von Figur 11 bis 26 sein. Der Schneckenförderer (54) ist mit einem gesteuerten Antrieb versehen, der bedarfsweise ein- und ausgeschaltet wird.

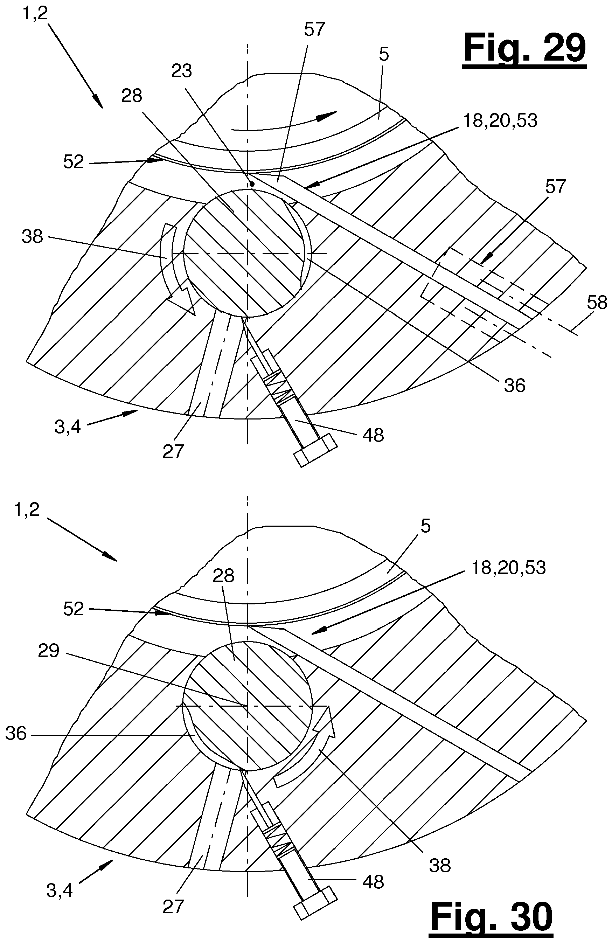

In Figur 29 und 30 ist eine weitere Abwandlung der Austrag- und Dosiervorrichtung (3,4) und der Reinigungsvorrichtung (2) dargestellt. Auch hier findet ein nicht unter Anspruch 1 fallendes mechanisches Ablösen der Filterrückstände von der vorbei bewegten Filteroberfläche (52) statt, wobei ein Schaber (53) mit einer Klinge (56) eingesetzt wird. Die Klinge (56) ist schräg und gegen die durch einen Pfeil symbolisierte Filterdrehrichtung an die Filteroberfläche (52) angestellt. Die z.B. dünne Klinge (56) kann einen durch Strichlinien angedeuteten Klingenhalter (57) aufweisen. Der im Gehäuse (10) angeordnete Klingenhalter (57) kann mit einem ebenfalls gestrichelt symbolisierten Stellmittel (58), z.B. mit Stellschrauben und ggf. mit einer Federunterstützung, gegen den Filter (5) bewegt und angestellt werden.

Das Dosierelement (28) ist als drehbare zylindrische Welle ausgebildet und mit einem Drehantrieb (38) versehen, wobei die Welle eine oder mehrere periphere Aufnahmetaschen (36) aufweist, die als mulden- oder rinnenförmige Vertiefungen am Wellenmantel ausgebildet sind. Das Dosierelement (28) ragt wiederum in den besagten Ringbereich und den Sammelbereich (23). An einer anderen Seite ist es mit einer Abführleitung (27) verbunden. Die Aufnahmetaschen (36) sind in diesem Ausführungsbeispiel flacher als in den vorbeschriebenen Varianten und haben eine größere Erstreckung in Umfangsrichtung. Der Taschenboden ist konvex, vorzugsweise konzentrisch zur Drehachse (29), gewölbt.

Zum sicheren Entleeren der portionsweise mit Filterrückständen befüllten Aufnahmetasche(n) (36) ist ein Räumelement (48) vorgesehen, das im Mündungsbereich der Abführleitung (27) im Gehäuse (10) angeordnet ist. Das Räumelement (48) ist hier als Schaber mit einer federbelasteten Klinge ausgebildet, die gegen die Drehrichtung des Dosierelements (28) und gegen den gewölbten Taschenboden schräg angestellt ist. Der Schaber (48) ist mittels einer Stellschraube oder dgl. verstellbar.

Figur 31 bis 33 zeigen eine weitere Variante der Austrag- und Dosiereinrichtung (3,4) für einen portionsweisen Materialaustrag. Die Reingigungsvorrichtung (2) kann eine beliebig, insbesondere gemäß der vorigen Varianten ausgebildete Ablöseeinrichtung (18) aufweisen, die hier z.B. als nicht unter Anspruch 1 fallende mechanische Trenneinrichtung (20) mit einem Schaber (53) ausgebildet ist.

Die Austragvorrichtung (3) hat eine oder mehrere am Sammelbereich (23) mündende Zuführleitungen (26). Das Dosierelement (28) ist als axial verschieblicher Stößel ausgebildet, der eine oder mehrere Aufnahmetaschen (36) in Form eines durchsetztenden Querkanals (45) aufweist, der in Durchflussstellung bündig und fluchtend an eine Zuführleitung (26) anschließt. Der Stößel (28) wird von einem Schiebeantrieb (44) gesteuert in Axialrichtung bewegt. Die Bewegungsrichtung kann quer zur Filterachse (15) ausgerichtet sein. Mehrere Aufnahmetaschen (36) können in einer Reihe längs des Filtermantels und der Filterachse (15) angeordnet sein.

Die Dosiereinrichtung (4) weist außerdem einen Kolben (34) auf, der einfach oder mehrfach vorhanden sein kann und fluchtend zu einer Zuführleitung (26) ausgerichtet ist. Der Kolben (34) kann den Querkanal (45) durchsetzen und in die Zuführleitung (26) eintauchen. Er wird von einem Schiebeantrieb (44) in Axialrichtung gesteuert bewegt.

Figur 31 zeigt eine Sperrstellung der Dosiereinrichtung (4), in welcher der Kolben (34) ausgefahren ist und die fluchtende Anordnung von Querkanal (45) und Zuführleitung (26) durchsetzt, wobei das vordere Kolbenende bis zum Rand der Filterkammer (11) bzw. zu deren Ringbereich ragt und dort mit der Gehäusewand (10) bündig abschließt. In dieser Sperrstellung wird im Sammelbereich (23) vor dem z.B. mit einer Klinge (56) ausgestatteten, nicht unter Anspruch 1 fallenden, Schaber (53) abgelöstes Filtermaterial gesammelt.

In der nächsten Betriebsstellung bzw. Aufnahmestellung von Figur 32 ist der Kolben (34) aus der Zuführleitung (26) und dem Querkanal (45) zurückgezogen und erlaubt einen Eintritt der abgelösten Filterrückstände. Er bildet dabei zugleich den Boden der Aufnahmetasche (36).

Figur 33 zeigt die Abgabestellung, in welcher das Dosierelement (28) mit der gefüllten Aufnahmetasche (36) zur Seite verschoben ist, wobei der massive Bereich (47) die Zuführleitung (26) verschließt. Die Aufnahmetasche (36) wird dabei in einen Abgabebereich gebracht, der ggf. außerhalb des Gehäuses (10) liegt und in dem eine Taschenleerung durch Schwerkraft oder ein Räumelement oder auf andere geeignete Weise erfolgen kann. Anschließend wird das Dosierelement (28) wieder in die Ausgangsstellung von Figur 31 zurückgefahren und der Kolben (34) vorgeschoben, wobei der portionsweise Dosierprozess erneut beginnen kann. Alternativ kann der Kolben (34) entfallen, wobei das Gehäuse (10,25) die Aufnahmetasche (36) nach unten verschließt.

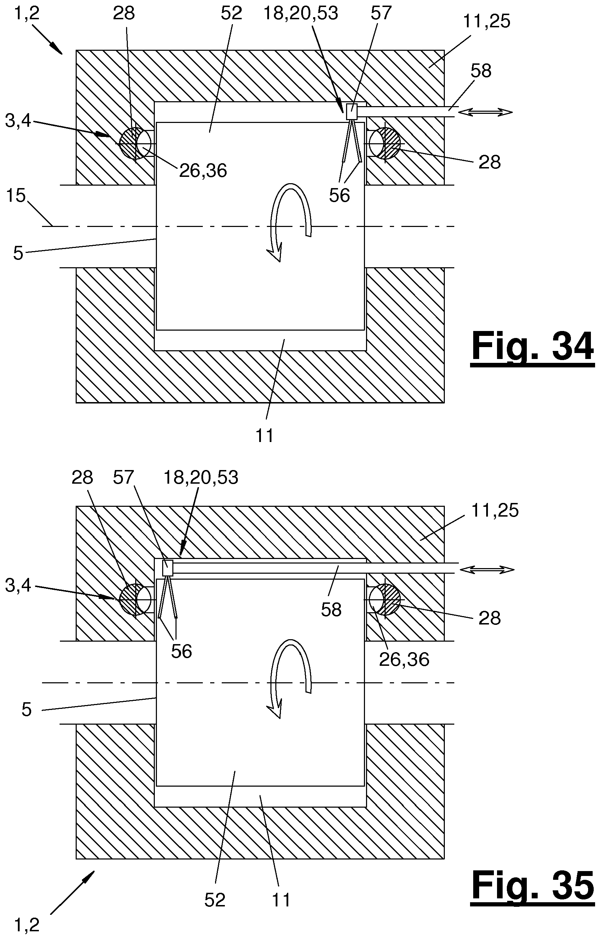

Figur 34 und 35 zeigen ein anderes Ausführungsbeispiel einer Filtereinrichtigung (1), einer Reinigungsvorrichtung (2), einer Austragvorrichtung (3) sowie einer Dosiereinrichtung (4). Der um eine Achse (15) in der Filterkammer (11) rotierende Filter (5) wird an seiner Filteroberfläche (52) von einer nicht unter Anspruch 1 fallenden mechanischen Trenneinrichtung (20) permanent oder intermittierend beaufschlagt. Die Trenneinrichtung (20) ist als in diesem Fall beweglicher Schaber (53) ausgebildet, der einen Klingenhalter (57) mit einer oder mehreren, z.B. zwei V-förmig ausgerichteten Klingen (56) versehen ist. Der Klingenhalter (57) ist mit einem Stellmittel (58) verbunden, das mit einem geeigneten Antrieb eine Schaber- und Klingenbewegung entlang der Filteroberfläche (52) bewirkt. Das Stellmittel (58) kann z.B. als Schieber ausgebildet sein, der eine Bewegung parallel zur Achse (15) des Rohrfilters (5) erzeugt. Die Klingen (56) sind an die Filteroberfläche (52) angestellt und werden an diese entlang bewegt, wobei sie die Filterrückstände ablösen und zu einer axialanschließenden Zuführleitung (26) transportieren sowie an ein dortiges Dosierelement (28) gemäß einem der vorbeschriebenen Ausführungsbeispiele übergeben. Die unterschiedlichen Klingenneigungen sind günstig für den Schaber- und Förderprozess in der jeweiligen Bewegungsrichtung.

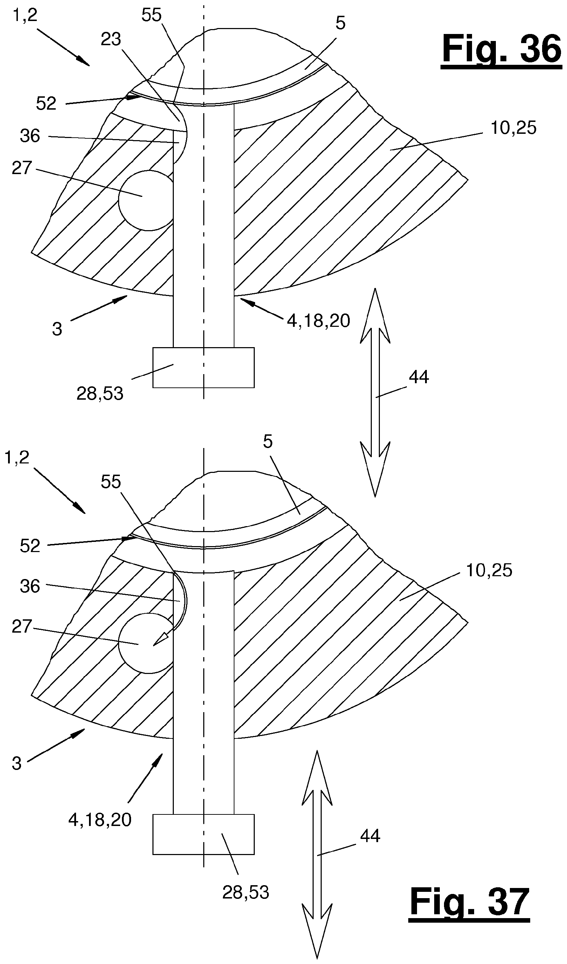

In der Variante von Figur 36 und 37 ist eine Kombination einer Ablöseeinrichtung (18), insbesondere einer nicht unter Anspruch 1 fallenden mechanischen Trenneinrichtung (20), mit einer Dosiereinrichtung (4) und einer Austragvorrichtung (3) dargestellt. Die Dosiereinrichtung (4) weist ein Dosierelement (28) auf, welches als axial verschieblicher Stößel und zugleich als Schaber (53) ausgebildet ist. Es dient für einen portionsweisen Materialaustrag. Die Dosiereinrichtung (4) und die mechanische Trenneinrichtung (20) bilden eine Bau- und Funktionseinheit.

Das Dosierelement (28) hat eine Ausrichtung mit einer überwiegenden radialen Richtungskomponente zur Filterachse (15) und ist im Gehäuse (10) gelagert. Das Dosierelement (28) kann mit seiner Vorderseite bis in den besagten Ringbereich der Filterkammer (11) und an die Filteroberfläche (52) bewegt werden. Am vorderen Ende hat das Dosierelement (28) eine oder mehrere seitliche Aufnahmetasche(n) (36), die als mulden- oder rinnenartige Vertiefung ausgebildet sein kann. Am Übergang der Aufnahmetasche(n) (36) zur Frontseite des Stößels (28), insbesondere am Taschenrand, ist eine Schabekante (55) zum Ablösen der Filterrückstände angeordnet oder ausgebildet.

Das Dosierelement (28) ist in einer Gehäuseöffnung geführt und wird von einem Schiebeantrieb (44) beaufschlagt. Die Aufnahmetasche (36) kann eine so große axiale Länge haben, dass sie in ausgefahrener Stößelposition ein Stück in die besagte Gehäuseöffnung hineinreicht. Die Aufnahmetasche (36) ist dadurch einerseits zum Sammelbereich (23) für einen Eintritt der abgelösten Filterrückstände offen und hat andererseits einen teilweise von der Gehäusewandung bedeckten Bereich. Figur 36 zeigt diese Ausbildung.

An geeigneter Stelle im Bewegungsbereich des Dosierelements (28), z.B. in der Gehäusewand, ist eine Abführleitung (27) angeordnet, in die eine Taschenentleerung erfolgen kann. Die seitlich vom Stößel angeordnete Abführleitung (27) kann eine kreisrunde Kanalform haben und sich längs der Achse (15) erstrecken. Die Form des Taschenbodens kann mit der Querschnittsform der Leitung (27) korrespondieren und diese z.B. in der Entleerungsstellung zu einer kreisrunden Querschnittsform ergänzen. Die Entleerung kann durch ein Räumelement (nicht dargestellt) unterstützt werden.

In den vorbeschriebenen Varianten der Dosiereinrichtung (4) mit einem beweglichen Dosierelement (28) kann sich die Formgebung und Ausrichtung des Dosierelements (4) nach der jeweiligen Filtergeometrie richten. In den gezeigten Ausführungsbeispiel kommt ein Rohrfilter (5) zum Einsatz. Alternativ ist ein Scheibenfilter oder ein Filter (5) mit einer anderen Filtergeometrie möglich.

Das Dosierelement (28) kann sich längs der Filterachse (15) erstrecken und eine mindestens der Filterlänge entsprechende Länge haben. Dies ist insbesondere bei den Varianten der Fall, in denen das Dosierelement (28) bis in die Filterkammer (11) bzw. in den Ringbereich ragt. Bei der Ausführungsform von Figur 36 und 37 kann der Stößel (28) eine Leisten- oder Plattenform haben. In der Variante von Figur 31 bis 33 kann auch der Kolben (34) eine lang gestreckte Leisten- oder Plattenform besitzen.

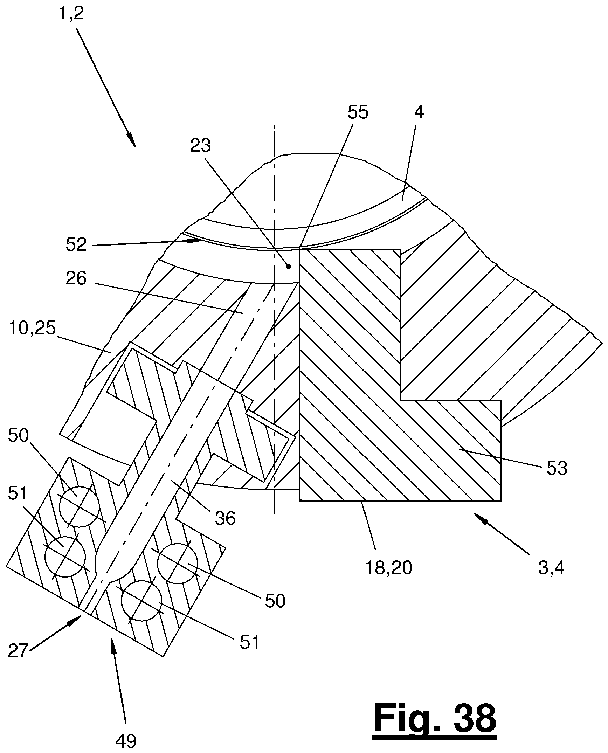

Figur 38 zeigt eine Variante der Austragvorrichtung (3) und der Dosiereinrichtung (4), bei der die Dosiereinrichtung (4) ein Dosierelement (28) mit einer Verfestigungseinrichtung (49) aufweist.

Die Filtereinrichtung (1) und die Reinigungsvorrichtung (2) nebst Ablöseeinrichtung (18) können in beliebiger Weise und insbesondere gemäß einer der vorigen Varianten ausgebildet sein. Im gezeigten Ausführungsbeispiel kommt eine nicht unter Anspruch 1 fallende mechanische Trenneinrichtung (20) mit einem Schaber (53) zum Einsatz. Die Austragvorrichtung (3) weist eine oder mehrere am Sammelbereich (23) mündende Zuführleitung(en) (26) auf, die am anderen Ende mit einer kanalartigen Aufnahmetasche (36) im Dosierelement (28) ggf. permanent verbunden sind. Die einfach oder mehrfach vorhandene Aufnahmetasche (36) kann an ihrem rückwärtigen Ende eine Verengung aufweisen. Dahinter kann sich mindestens eine Abführleitung (27) anschließen. Das Dosierelement (28) weist einen am Gehäuse (10, 25) montierbaren Korpus auf, der die Aufnahmetasche(n) (36) und Teile der Verfestigungseinrichtung (49) aufnimmt.

Die Verfestigungseinrichtung (49) beeinflusst die Fließfähigkeit, insbesondere den Aggregatszustand, der abgelösten Filterrückstände und der darin enthaltenen Fluidpartikel, insbesondere Kunststoffpartikel. Diese Masse oder Mischung kann z.B. verfestigt oder verflüssigt werden. Dementsprechend kann diese Masse die Aufnahmetasche(n) (36) und insbesondere deren endseitige Verengung passieren oder nicht passieren. Eine verfestigte Masse bildet einen Pfropfen, der die Aufnahmetasche (36) blockiert und einen Materialaustrag verhindert. Durch entsprechende Steuerung der Verfestigungseinrichtung (49) kann im Strom oder portionsweise Rückstandsmaterial mit Fluidpartikeln ausgetragen werden.

Die Änderung des Fließverhaltens, insbesondere eine Verfestigung und Verflüssigung, kann auf unterschiedliche Weise erfolgen. Im gezeigten und bevorzugten Ausführungsbeispiel geschieht dies auf thermischem Wege. Durch Kältezufuhr erfolgt eine Erstarrung und durch Wärmezufuhr eine Verflüssigung. Die Verfestigungseinrichtung (49) weist hierfür eine geeignete Kühleinrichtung (50) und eine Heizeinrichtung (51) auf. Die Kühl- und Heizeinrichtung (50,51) können externe Kälte- bzw. Heizaggregate und dort angeschlossene Leitungen für ein Wärme bzw. Kälte übertragendes Medium aufweisen, die bis zum Dosierelement (28) und in die Nähe der Aufnahmetasche(n) (36) geführt sind. Die Kühl- und Heizleitungen können in der genannten Reihenfolge in Austragrichtung hintereinander angeordnet sein.

Alternativ können die Kühl- und/oder Heizeinrichtung (50, 51) vollständig am Dosierelement (28) angebaut sein und von außen mit Betriebsmitteln, insbesondere Strom und Wasser, versorgt werden. In weiterer Abwandlung kann die Verfestigung und Verflüssigung durch andere Maßnahmen, z.B. durch chemische Reaktion unter Zugabe eines Reaktors oder Katalysators oder durch Anlegen von elektrischen oder elektromagnetischen Feldern erfolgen. Die Verfestigungseinrichtung (49) kann auch einen Fließstop der Masse durch Magnetkraft unter Einwirkung auf magnetisch leitende Massenbestandteile bewirken.

Die Ausführungsformen von Figur 16 bis 38 mit den verschiedenen Ausführungsformen der Austragvorrichtung (3) und ggf. der Reinigungsvorrichtungen (2) haben jeweils eine eigenständige erfinderische Bedeutung. Insbesondere die Austragvorrichtung (3) können direkt und ohne eine Zuführleitung (26) an einen Sammelbereich (23) anschließen. Sie können auch an oder am Filtergehäuse (10) angeordnet sein.

In Variation zu den Figuren 16 bis 38 können die hier gezeigten Austragvorrichtungen (3) auch über eine Zuführleitung (26) an einen Sammelbereich (23) angeschlossen werden. Dies kann z.B. gemäß einer der Ausführungsformen gemäß Figur 1 bis 15 erfolgen.

Die Dosiereinrichtung (4) für den Austrag von einer beweglichen Masse (9), insbesondere von abgelösten Filterrückständen, aus einem unter Druck stehenden Prozessraum hat ebenfalls eigenständige erfinderische Bedeutung und kann auch bei beliebigen anderen Reinigungs- und Austragvorrichtungen (2,3) eingesetzt werden. Hierbei weist die Dosiereinrichtung (4) ein axial verschiebliches oder um eine Achse (29) rotierendes Dosierelement (28), insbesondere eine Welle, mit einer oder mehreren, an der Außenseite des Dosierelements (28) angeordneten und in ihrem Volumen mittels eines Aktors (33) mit einem Stößel (34) veränderbaren Aufnahmetasche(n) (36) für Aufnahme und Abgabe einer Portion (35) der Masse (9) aufweist, wobei der Aktor (33) eine Stelleinrichtung (39) zur Veränderung des Stößelhubs aufweist. Die weiteren konstruktiven und funktionalen Details können gemäß Figur 9 und 10 ausgebildet sein.

Weitere Abwandlungen der vorbeschriebenen Ausführungsbeispiele und der weiteren Varianten sind in verschiedener Weise möglich.

Zum einen kann die Strömungsrichtung der Fluide durch die Filter (5,6) umgedreht werden. Insbesondere kann bei einem Rohrfilter (5) die Strömungsrichtung von innen nach außen gerichtet sein.

Ferner ist eine kinematische Umkehr der Filterdrehung möglich. Der Filter (5,6) kann stationär angeordnet sein, wobei die Reinigungsvorrichtung (2) und ggf. auch die Austragvorrichtung (3) und die Dosiereinrichtung (2) um eine Achse (15) drehen.

Der Filter kann eine beliebige Form und Ausführung haben. Statt des gezeigten Rohrfilters (5) kann ein Scheibenfilter oder ein anderer Filter zum Einsatz kommen. Ein Scheibenfilter oder anderer Filter wird ebenfalls bevorzugt bewegt, insbesondere um eine Achse (15) gedreht. Mit der anderen Filtergeometrie ändern sich entsprechend die Zuordnung und Ausrichtung der Komponenten der Reinigungsvorrichtung (2), der Austragvorrichtung (3) und der Dosiereinrichtung (4). Insbesondere haben die Komponenten der Ablöseeinrichtung (18) eine entsprechend geänderte Ausrichtung und Anordnung.

Ein angetriebenes Räumelement (48) und/oder der Schneckenförderer (54) können einen steuerbaren und ggf. regelbaren Antrieb aufweisen. Dieser Antrieb kann unabhängig von einem Drehantrieb des Filters (5) gesteuert oder geregelt werden.

Außerdem können die Merkmale der vorbeschriebenen Ausführungsbeispiele und deren Abwandlungen untereinander in verschiedener Weise kombiniert und insbesondere ausgetauscht werden.

### BEZUGSZEICHENLISTE

- 1: Filtereinrichtung
- 2: Reinigungsvorrichtung
- 3: Austragvorrichtung
- 4: Dosiereinrichtung
- 5: Filter, Rohrfilter
- 6: Filter, Scheibenfilter
- 7: Fluid ungefiltert
- 8: Fluid gefiltert
- 9: Filterrückstand
- 10: Gehäuse
- 11: Filterkammer, Prozessraum
- 12: Zuführung, Fluidzuführung
- 13: Abführung, Fluidabführung
- 14: Fließrichtung
- 15: Achse
- 16: Filterträger, Lochscheibe, Lochzylinder
- 17: Filterelement, Kartusche, Sieb
- 18: Ablöseeinrichtung für Filterrückstand
- 19: Rückspüleinrichtung
- 20: Trenneinrichtung mechanisch
- 21: Reinigungsbereich
- 22: Rückführkanal
- 23: Sammelbereich
- 24: Sammelkanal
- 25: Gehäuse
- 26: Zuführleitung
- 27: Abführleitung, Rückstandspeicher
- 28: Dosierelement, Drehkörper, Welle, Stößel
- 29: Achse
- 30: Gehäusewand
- 31: Einlassöffnung
- 32: Auslassöffnung
- 33: Aktor
- 34: Stößel, Kolben
- 35: Portion
- 36: Aufnahmetasche
- 37: Aufnahmekanal, Durchgangskanal für Stößel/Kolben
- 38: Drehantrieb
- 39: Stelleinrichtung
- 40: Stellelement, Stellstange
- 41: Stellelement, Stellöffnung
- 42: Stellfläche, Keilfläche an Stellstange
- 43: Stellfläche, Keilfläche an Stellöffnung
- 44: Antrieb, Schiebeantrieb
- 45: Querkanal
- 46: Zentralkanal
- 47: massiver Bereich
- 48: Räumelement, Stößel, Schaber
- 49: Verfestigungseinrichtung
- 50: Kühleinrichtung, Kühlkanal
- 51: Heizeinrichtung, Heizkanal
- 52: Filteroberfläche
- 53: Schaber
- 54: Schneckenförderer
- 55: Schabekante
- 56: Klinge
- 57: Klingenhalter
- 58: Stellmittel

- P: Fluiddruck

## Patentansprüche

1. Filtereinrichtung für Kunststoffschmelzen mit einem Filter (5,6) und einer Reinigungsvorrichtung (2) hierfür, wobei die Reinigungsvorrichtung (2) eine Ablöseeinrichtung (18) für Filterrückstände (9) vom Filter (5,6) und eine Austragvorrichtung (3) für die abgelösten Filterrückstände (9) aufweist,
wobei die Reinigungsvorrichtung (2) einen Sammelbereich (23) am Filter (5,6) sowie eine dort mittels einer Zuführleitung (26) angeschlossene Austragvorrichtung (3) für die abgelösten Filterrückstände (9) aufweist,
und wobei die Ablöseeinrichtung (18) als Rückspüleinrichtung (19) ausgebildet ist,
**dadurch gekennzeichnet, dass**
- die Austragvorrichtung (3) im Anschluss an die Zuführleitung (26) eine steuerbare Dosiereinrichtung (4) aufweist, welche die Zuführleitung (26) absperrt und abgelöste Filterrückstände (9) aus der Zuführleitung (26) portionsweise (35) dosierbar aufnimmt und an anderer Stelle wieder abgibt,
- wobei die Dosiereinrichtung (4) ein steuerbar bewegliches, insbesondere drehbar und/oder verschieblich angeordnetes, Dosierelement (28) aufweist,
- wobei das Dosierelement (28) einen massiven Bereich (47) und eine oder mehrere Aufnahmetasche(n) (36) für Aufnahme und Abgabe einer Portion (35) abgelöster Filterrückstand (9) aufweist.

2. Filtereinrichtung nach Anspruch 1, **dadurch gekennzeichnet, dass** der Sammelbereich (23) an der Reinigungsseite des Filters (5,6) angeordnet ist.

3. Filtereinrichtung nach Anspruch 1 oder 2, **dadurch gekennzeichnet, dass** der ggf. abgedichtete Sammelbereich (23) mehrere Sammelkanäle (24) aufweist, die mit jeweils einer Zuführleitung (26) verbunden sind.

4. Filtereinrichtung nach Anspruch 1, 2 oder 3, **dadurch gekennzeichnet, dass** die Dosiereinrichtung (4) zwischen einer Zuführleitung (26) und einer Abführleitung (27) und in einem Gehäuse (25) der Austragvorrichtung (3) angeordnet ist.

5. Filtereinrichtung nach einem der vorhergehenden Ansprüche, **dadurch gekennzeichnet, dass** die Dosiereinrichtung (4) einen steuerbaren Antrieb (38, 44) für das Dosierelement (28) aufweist.

6. Filtereinrichtung nach einem der vorhergehenden Ansprüche, **dadurch gekennzeichnet, dass** die Aufnahmetasche(n) (36) in ihrem Volumen veränderbar ist/sind, wobei das Dosierelement (28), insbesondere eine Welle, einen das Taschenvolumen verkleinernden und vergrößernden Aktor (33) aufweist.

7. Filtereinrichtung nach einem der vorhergehenden Ansprüche, **dadurch gekennzeichnet, dass** das als Drehkörper ausgebildete Dosierelement (28) eine oder mehrere periphere Aufnahmetasche(n) (36) aufweist, die zur Aufnahme und Abgabe einer Materialportion (35) dienen, wobei die Zahl und Anordnung der Aufnahmetaschen (36) sich nach der Zahl und Anordnung der Zuleitungen (26) richtet.

8. Filtereinrichtung nach einem der vorhergehenden Ansprüche, **dadurch gekennzeichnet, dass** das Dosierelement (28) eine oder mehrere als durchgehender Querkanal (45) ausgebildete Aufnahmetasche(n) (36) aufweist.

9. Filtereinrichtung nach einem der vorhergehenden Ansprüche, **dadurch gekennzeichnet, dass** das Dosierelement (28) einen beweglichen eingebauten oder zugeordneten Kolben (34) aufweist, der das Volumen der Aufnahmetasche (36) verkleinert und vergrößert.

10. Filtereinrichtung nach einem der Ansprüche 6 bis 8, **dadurch gekennzeichnet, dass** der Aktor (33) einen beweglichen und den Taschenboden bildenden Stößel (34) aufweist.

11. Filtereinrichtung nach Anspruch 10, **dadurch gekennzeichnet, dass** der Aktor (33) einen quer zur Drehachse (29), bevorzugt radial, ausgerichteten Aufnahmekanal (37) im Dosierelement (28) aufweist, wobei der Stößel (34) längsverschieblich im Aufnahmekanal (37) angeordnet ist und eine kleinere Länge als der Aufnahmekanal (37) aufweist.

12. Filtereinrichtung nach Anspruch 11, **dadurch gekennzeichnet, dass** der Aufnahmekanal (37) als Durchgangskanal mit beidseitigen Mündungsöffnungen (31,32) ausgebildet ist, wobei die Zuführ- und Abführleitung (26,27) derart in Relation zueinander und zum Aufnahmekanal (37) angeordnet sind, dass sie in mindestens einer Drehstellung des Drehkörpers (28) mit beiden Mündungsöffnungen (31, 32) gleichzeitig in Deckung stehen.

13. Filtereinrichtung nach Anspruch 10, 11 oder 12, **dadurch gekennzeichnet, dass** das Dosierelement (28), insbesondere eine Welle, mehrere Aktoren (33) und mehrere Aufnahmetaschen (36) aufweist, wobei bevorzugt mehrere Aktoren (33) und mehrere Aufnahmetaschen (36) längs der Drehachse (29) hintereinander angeordnet sind und dabei bezüglich der Drehachse (29) gleiche oder unterschiedliche Winkelausrichtungen, insbesondere gekreuzte Ausrichtungen, aufweisen.

14. Filtereinrichtung nach einem der vorhergehenden Ansprüche, **dadurch gekennzeichnet, dass** der Transport und Austrag der abgelösten Filterrückstände über den in der Reinigungsvorrichtung (2) bestehenden fluidischen Materialdruck getrieben wird.

15. Verfahren zum Austrag von Filterrückständen (9) an einer Filtereinrichtung (1) für Kunststoffschmelzen mit einem Filter (5,6), wobei die Filterrückstände (9) mittels einer Reinigungsvorrichtung (2) von einem Filter (5,6) abgelöst werden, wobei die abgelösten Filterrückstände (9) von einem Sammelbereich (23) der Reinigungsvorrichtung (2) über eine Zuführleitung (26) einer Austragvorrichtung (3) zugeführt werden,
und wobei die Ablöseeinrichtung (18) als Rückspüleinrichtung (19) ausgebildet ist,
**dadurch gekennzeichnet, dass** die Zuführleitung (26) von einer steuerbarer Dosiereinrichtung (4) der Austragvorrichtung (3) abgesperrt wird, wobei die Dosiereinrichtung (4) abgelöste Filterrückstände (9) aus der Zuführleitung (26) portionsweise (35) dosiert, aufnimmt und an anderer Stelle wieder abgibt und
wobei die Dosierung und die Abgabe der abgelösten Filterrückstände (9) durch ein steuerbar bewegliches, insbesondere drehbares und/oder verschiebliches, Dosierelement (28) mittels Taschenbildung erfolgt.

## Claims

1. Filter device for polymer melts, with a filter (5, 6) and a cleaning device (2) therefor, wherein the cleaning device (2) has a detaching device (18) for detaching filter residues (9) from the filter (5, 6) and a discharge device (3) for discharging the detached filter residues (9), wherein the cleaning device (2) has a collection area (23) on the filter (5, 6) as well as a discharge device (3) for discharging the detached filter residues (9) which is connected there by means of a feed line (26), and wherein the detaching device (18) is formed as a backwashing device (19), **characterized in that**
- the discharge device (3) has, following the feed line (26), a controllable metering device (4) which shuts off the feed line (26) and receives, and discharges again at another location, detached filter residues (9) from the feed line (26) in portions (35) in a manner that allows metering,
- wherein the metering device (4) has a controllably movable, in particular rotatably and/or displaceably arranged, metering element (28),
- wherein the metering element (28) has a solid region (47) and one or more receiving pocket(s) (36) for receiving and discharging a portion (35) of detached filter residue (9).

2. Filter device according to Claim 1, **characterized in that** the collection area (23) is arranged on the cleaning side of the filter (5, 6).

3. Filter device according to Claim 1 or 2, **characterized in that** the possibly sealed collection area (23) has a plurality of collection channels (24), each connected to a feed line (26).

4. Filter device according to Claim 1, 2 or 3, **characterized in that** the metering device (4) is arranged between a feed line (26) and a discharge line (27) and in a housing (25) of the discharge device (3).

5. Filter device according to one of the preceding claims, **characterized in that** the metering device (4) has a controllable drive (38, 44) for the metering element (28).

6. Filter device according to one of the preceding claims, **characterized in that** the volume of the receiving pocket(s) (36) is variable, wherein the metering element (28), in particular a shaft, has an actuator (33) that decreases and increases the volume of the pocket.

7. Filter device according to one of the preceding claims, **characterized in that** the metering element (28), formed as a rotary body, has one or more peripheral receiving pocket(s) (36) which serve for receiving and discharging a material portion (35), wherein the number and arrangement of the receiving pockets (36) are dictated by the number and arrangement of the feed lines (26).

8. Filter device according to one of the preceding claims, **characterized in that** the metering element (28) has one or more receiving pocket (s) formed as a continuous transverse channel (45).

9. Filter device according to one of the preceding claims, **characterized in that** the metering element (28) has a movable integrated or assigned piston (34) which decreases and increases the volume of the receiving pocket (36).

10. Filter device according to one of Claims 6 to 8, **characterized in that** the actuator (33) has a movable plunger (34) which forms the base of the pocket.

11. Filter device according to Claim 10, **characterized in that** the actuator (33) has a receiving channel (37) in the metering element (28) which is aligned transversely to the axis of rotation (29), preferably radially, wherein the plunger (34) is arranged in the receiving channel (37) in a longitudinally displaceable manner and has a smaller length than the receiving channel (37) .

12. Filter device according to Claim 11, **characterized in that** the receiving channel (37) is formed as a through-channel with mouth openings (31, 32) on both sides, wherein the feed line and discharge line (26, 27) are arranged in relation to one another and to the receiving channel (37) in such a manner that they are simultaneously congruent with both mouth openings (31, 32) in at least one rotary position of the rotary body (28).

13. Filter device according to Claim 10, 11 or 12, **characterized in that** the metering element (28), in particular a shaft, has multiple actuators (33) and multiple receiving pockets (36), wherein preferably multiple actuators (33) and multiple receiving pockets (36) are arranged one behind the other along the axis of rotation (29) and in this case have the same or different angular alignments, in particular crossed alignments, with respect to the axis of rotation (29).

14. Filter device according to one of the preceding claims, **characterized in that** the transport and discharge of the detached filter residues is driven by means of the fluidic material pressure present in the cleaning device (2).

15. Method for discharging filter residues (9) on a filter device (1) for polymer melts with a filter (5, 6), wherein the filter residues (9) are detached from a filter (5, 6) by means of a cleaning device (2), wherein the detached filter residues (9) are fed from a collection area (23) of the cleaning device (2) via a feed line (26) to a discharge device (3), and wherein the detaching device (18) is formed as a backwashing device (19), **characterized in that** the feed line (26) is shut off by a controllable metering device (4) of the discharge device (3), wherein the metering device (4) meters, receives, and discharges again at another location detached filter residues (9) from the feed line (26) in portions (35) and wherein the detached filter residues (9) are metered and discharged by a controllably movable, in particular rotatable and/or displaceable, metering element (28) by means of pocket formation.

## Revendications

1. Dispositif filtrant pour des matières plastiques en fusion, comprenant un filtre (5, 6) et un dispositif de nettoyage (2) pour celui-ci, le dispositif de nettoyage (2) présentant un dispositif de détachement (18) pour des résidus de filtrage (9) du filtre (5, 6) et un dispositif d'évacuation (3) pour les résidus de filtrage (9) détachés, le dispositif de nettoyage (2) présentant une zone de collecte (23) au niveau du filtre (5, 6) ainsi qu'un dispositif d'évacuation (3) pour les résidus de filtrage (9) détachés, raccordé à cet endroit au moyen d'une conduite d'alimentation (26), et le dispositif de détachement (18) étant réalisé sous forme de dispositif de rétro-lavage (19),
**caractérisé en ce que**
- le dispositif d'évacuation (3) présente, à la suite de la conduite d'alimentation (26), un dispositif de dosage commandable (4) qui bloque la conduite d'alimentation (26) et reçoit de manière dosable par portion (35) des résidus de filtrage (9) détachés provenant de la conduite d'alimentation (26) et les délivre à nouveau à un autre endroit,
- le dispositif de dosage (4) présentant un élément de dosage (28) déplaçable de manière commandable, en particulier rotatif et/ou coulissant,
- l'élément de dosage (28) présentant une zone massive (47) et une ou plusieurs cavités de réception (36) pour recevoir et délivrer une portion (35) de résidu de filtrage (9) détaché.

2. Dispositif filtrant selon la revendication 1, **caractérisé en ce que** la zone de collecte (23) est disposée au niveau du côté de nettoyage du filtre (5, 6) .

3. Dispositif filtrant selon la revendication 1 ou 2, **caractérisé en ce que** la zone de collecte (23) éventuellement étanchéifiée présente plusieurs canaux de collecte (24) qui sont à chaque fois connectés à une conduite d'alimentation (26).

4. Dispositif filtrant selon la revendication 1, 2 ou 3, **caractérisé en ce que** le dispositif de dosage (4) est disposé entre une conduite d'alimentation (26) et une conduite d'évacuation (27) et dans un boîtier (25) du dispositif d'évacuation (3).

5. Dispositif filtrant selon l'une quelconque des revendications précédentes, **caractérisé en ce que** le dispositif de dosage (4) présente un entraînement commandable (38, 44) pour l'élément de dosage (28).

6. Dispositif filtrant selon l'une quelconque des revendications précédentes, **caractérisé en ce que** la ou les cavités de réception (36) présentent un volume variable, l'élément de dosage (28), en particulier un arbre, présentant un actionneur (33) pouvant diminuer et augmenter le volume des cavités.

7. Dispositif filtrant selon l'une quelconque des revendications précédentes, **caractérisé en ce que** l'élément de dosage (28) réalisé sous forme de corps rotatif présente une ou plusieurs cavités de réception périphériques (36) qui servent à recevoir et délivrer une portion de matière (35), le nombre et l'agencement des cavités de réception (36) dépendant du nombre et de l'agencement des conduites d'alimentation (26).

8. Dispositif filtrant selon l'une quelconque des revendications précédentes, **caractérisé en ce que** l'élément de dosage (28) présente une ou plusieurs cavités de réception (36) réalisées sous forme de canal transversal continu (45).

9. Dispositif filtrant selon l'une quelconque des revendications précédentes, **caractérisé en ce que** l'élément de dosage (28) présente un piston mobile (34) incorporé ou associé, qui réduit et augmente le volume de la cavité de réception (36).

10. Dispositif filtrant selon l'une quelconque des revendications 6 à 8, **caractérisé en ce que** l'actionneur (33) présente une tige poussoir (34) déplaçable formant le fond de la cavité.

11. Dispositif filtrant selon la revendication 10, **caractérisé en ce que** l'actionneur (33) présente un canal de réception (37) orienté transversalement à l'axe de rotation (29), de préférence radialement, dans l'élément de dosage (28), la tige poussoir (34) étant disposée de manière déplaçable longitudinalement dans le canal de réception (37) et présentant une plus petite longueur que le canal de réception (37).

12. Dispositif filtrant selon la revendication 11, **caractérisé en ce que** le canal de réception (37) est réalisé sous forme de canal de passage avec des ouvertures d'embouchure (31, 32) des deux côtés, les conduites d'alimentation et d'évacuation (26, 27) étant disposées l'une par rapport à l'autre et par rapport au canal de réception (37) de telle sorte qu'elles soient simultanément en coïncidence avec les deux ouvertures d'embouchure (31, 32) dans au moins une position de rotation du corps rotatif (28).

13. Dispositif filtrant selon la revendication 10, 11 ou 12, **caractérisé en ce que** l'élément de dosage (28), en particulier un arbre, présente plusieurs actionneurs (33) et plusieurs cavités de réception (36), de préférence plusieurs actionneurs (33) et plusieurs cavités de réception (36) étant disposés les uns derrière les autres le long de l'axe de rotation (29) et présentant en l'occurrence, par rapport à l'axe de rotation (29), des orientations angulaires identiques ou différentes, en particulier des orientations croisées.

14. Dispositif filtrant selon l'une quelconque des revendications précédentes, **caractérisé en ce que** le transport et l'évacuation des résidus de filtrage détachés s'effectuent par le biais de la pression de matière fluide existant dans le dispositif de nettoyage (2).

15. Procédé d'évacuation de résidu de filtrage (9) au niveau d'un dispositif filtrant (1) pour des matières plastiques en fusion, comprenant un filtre (5, 6), les résidus de filtrage (9) étant détachés d'un filtre (5, 6) au moyen d'un dispositif de nettoyage (2), les résidus de filtrage (9) détachés étant acheminés d'une zone de collecte (23) du dispositif de nettoyage (2) par le biais d'une conduite d'alimentation (26) à un dispositif d'évacuation (3), et le dispositif de détachement (18) étant réalisé sous forme de dispositif de rétro-lavage (19),
**caractérisé en ce que** la conduite d'alimentation (26) est bloquée par un dispositif de dosage commandable (4) du dispositif d'évacuation (3), le dispositif de dosage (4) dosant par portions (35) des résidus de filtrage (9) détachés provenant de la conduite d'alimentation (26), les recevant et les délivrant à nouveau à un autre endroit et
le dosage et l'évacuation des résidus de filtrage (9) détachés s'effectuant par un élément de dosage (28) déplaçable de manière commandable, en particulier rotatif et/ou coulissant, au moyen d'une formation de cavités.
